# EUROPÄISCHE PATENTSCHRIFT

(11) **EP 4 397 165 B1**
(45) Veröffentlichungstag und Bekanntmachung des Hinweises auf die Patenterteilung: **29.10.2025**
(21) Anmeldenummer: 24175321.9
(22) Anmeldetag: 23.01.2023
(51) Int. Cl.: A01C 7/10, A01C 7/20, A01C 7/08

(54) **BODENBEARBEITUNGSMASCHINE**
SOIL WORKING MACHINE
MACHINE DE TRAITEMENT DE SOL

(30) Priorität: 03.02.2022 DE 102022102515
(43) Veröffentlichungstag der Anmeldung: 10.07.2024
(62) Teilanmeldung aus: 23401001.5
(73) Patentinhaber: Amazonen-Werke H. Dreyer SE & Co. KG, 49205 Hasbergen (DE)
(72) Erfinder: SCHEUFLER, Bernd, 49205 Hasbergen (DE); WESSELS, Thomas, 49080 Osnabrück (DE)

(56) Entgegenhaltungen:
- EP-A1- 3 698 613
- EP-A1- 4 032 383
- EP-A2- 2 924 417
- WO-A1-2005/096798
- DE-A1- 102011 001 949
- US-A1- 2007 266 917

## Beschreibung

Die Erfindung betrifft ein Erfassungssystem für Saatkörner, ein Verfahren zum Erfassen von Saatkörnern in einer Saatgutförderleitung und ein Verfahren zum Einstellen einer Dosiervorrichtung.

Bei der Aussaat von Getreide oder anderen schüttgutartigen Saatgütern wird üblicherweise beabsichtigt, eine spezifische Anzahl von Körnern pro Fläche auf die landwirtschaftliche Nutzfläche auszubringen. Hierzu wird an einer Dosiervorrichtung der Sämaschine eine geeignete Einstellung vorgenommen. Der Einstellwert für die Dosiervorrichtung wird bisher durch eine Abdrehprobe ermittelt.

Bei der Abdrehprobe wird der Sävorgang simuliert. Mit einer Handkurbel wird die Vorwärtsfahrt nachgeahmt und das dosierte Saatgut in Mulden oder Schalen aufgefangen. Eine festgelegte Anzahl von Kurbeldrehungen ist einer bestimmten Wegstrecke zugeordnet. Durch eine Multiplikation der Wegstrecke mit der Arbeitsbreite der Sämaschine ergibt sich die bearbeitete Fläche. Durch Wiegen der abgedrehten Menge und dem Tausendkorngewicht lässt sich eine Umrechnung von Gewicht zu Körnerzahl vornehmen.

Die Ermittlung des Einstellwerts für die Dosiervorrichtung durch eine Abdrehprobe ist fehlerbehaftet und ungenau, da sich die Tausendkorngewichte und die Fließeigenschaften infolge von Luftfeuchte oder Beize ständig ändern können. Ferner ist eine Abdrehprobe umständlich und arbeitsintensiv.

Im Stand der Technik sind bereits Körnerzähleinrichtungen bekannt, mit denen eine Abdrehprobe vermieden werden kann. Die bekannten Körnerzähleinrichtungen arbeiten beispielsweise mit einer indirekten Messung, bei welcher die Induktivitätsänderung einer Spule, die um eine Saatgutförderleitung der Sämaschine gewickelt ist, erfasst wird, wenn die Saatkörner durch die Saatgutförderleitung fließen. Ferner ist die Verwendung eines Piezoquarzes zum Zählen von Körnern bekannt, wobei der Saatgutstrom auf den Piezoquarz gelenkt wird, sodass der Piezoquarz elektrische Aufprallimpulse liefert. Diese Messmethoden sind vergleichsweise unpräzise, insbesondere vor dem Hintergrund, dass große Unterschiede bei den Ausbringmengen bzw. Kornfrequenzen und Korngrößenspektren bei den unterschiedlichen Saatgütern, beispielsweise Raps, Getreide oder Bohnen, auftreten können.

Aus der Druckschrift US 2007/266917 A1 ist ferner eine Auswerteeinrichtung bekannt, welche dazu eingerichtet ist, eine oder mehrere durch eine Kamera erzeugten Bildaufnahmen des Aufnahmebereichs zum Erfassen der den Aufnahmebereich passierenden Saatkörner auszuwerten.

Außerdem sind Körnerzähleinrichtungen mit einem optischen Sensor bekannt. Bei solchen Körnerzähleinrichtungen werden beispielsweise Lichtschranken zur Körnerzählung eingesetzt. Die Erfassungsgenauigkeit solcher Systeme ist vergleichsweise gering. Darüber hinaus können Verschmutzungen das Messergebnis verfälschen.

Die der Erfindung zugrundeliegende Aufgabe besteht also darin, die Körnerzählung an einer Sämaschine zu verbessern und/oder zu vereinfachen.

Die Aufgabe wird gelöst durch die Merkmale gemäß Anspruch 1 und durch ein Verfahren nach Anspruch 7.

Die Haltevorrichtung weist eine Geräteaufnahme auf, über welche ein eine Kamera aufweisendes mobiles Endgerät an der Haltevorrichtung fixierbar ist. Das mobile Endgerät kann mittels der Haltevorrichtung beispielsweise an einer Saatgutförderleitung und/oder einem Säschar einer pneumatischen oder mechanischen Sämaschine angebaut werden.

Die Haltevorrichtung erlaubt eine präzise Erfassung der Körner mittels der Kamera des mobilen Endgeräts. Moderne mobile Endgeräte weisen hochwertige Kamerasysteme und eine hohe Rechenleistung auf, sodass das Erzeugen von Bildaufnahmen und das Auswerten der Bildaufnahmen schnell und präzise erfolgen kann.

Die Haltevorrichtung wird ferner dadurch vorteilhaft weitergebildet, dass die Geräteaufnahme dazu eingerichtet ist, das mobile Endgerät kraft- und/oder formschlüssig an der Haltevorrichtung zu fixieren. Die Geräteaufnahme kann hierfür beispielsweise eine oder mehrere Geräteklemmglieder umfassen, über welche das mobile Endgerät an der Haltevorrichtung verklemmt werden kann. Alternativ oder zusätzlich ist die Befestigungsvorrichtung dazu eingerichtet, die Haltevorrichtung kraft- und/oder formschlüssig an einer Saatgutförderleitung und/oder einem Säschar zu befestigen. Die Befestigungsvorrichtung kann ein oder mehrere Leitungsklemmglieder und/oder ein oder mehrere Scharklemmglieder umfassen, über welche die Haltevorrichtung an einer Saatgutförderleitung und/oder einem Säschar festgeklemmt werden kann.

In einer Weiterbildung der Haltevorrichtung ist die Geräteaufnahme derart verstellbar, dass die Relativposition eines in der Geräteaufnahme fixierten mobilen Endgeräts und einer Saatgutförderleitung und/oder einem Säschar, an welcher bzw. an welchem die Haltevorrichtung über die Befestigungsvorrichtung befestigt ist, veränderbar ist. Über die verstellbare Geräteaufnahme kann die Kamera bzw. die Linse oder das Linsensystem der Kamera des mobilen Endgeräts zur Saatgutförderleitung und/oder zum Säschar positioniert und/oder ausgerichtet werden.

Es ist ferner eine Haltevorrichtung bevorzugt, bei welcher die Geräteaufnahme dazu eingerichtet ist, mobile Endgeräte unterschiedlicher Größe und/oder Form an der Haltevorrichtung zu fixieren. Die Geräteklemmglieder der Haltevorrichtung können innerhalb eines Verstellbereichs verstellt werden, sodass mobile Endgeräte unterschiedlicher Hersteller und/oder Serien an der Haltevorrichtung fixiert werden können.

In einer anderen bevorzugten Ausführungsform weist die Haltevorrichtung eine Auslöseeinrichtung auf, über welche ein Bedienelement des mobilen Endgeräts betätigbar ist. Über die Auslöseeinrichtung kann eine Bildaufnahme durch das mobile Endgerät ausgelöst werden. Die Auslöseeinrichtung kann beispielsweise dazu eingerichtet sein, einen Touchscreen des mobilen Endgeräts zu berühren und/oder einen Knopf, eine Taste oder einen Schalter des mobilen Endgeräts zu betätigen. Über die Auslöseeinrichtung kann eine Fingerberührung am mobilen Endgerät simuliert werden. Die Auslöseeinrichtung kann mechanisch und/oder manuell betätigbar sein. Die Auslöseeinrichtung kann über einen fernsteuerbaren Aktuator betätigbar sein. Die Fernsteuerung des Aktuators kann manuell oder automatisiert erfolgen.

Die Haltevorrichtung wird ferner durch einen Bewegungsmechanismus vorteilhaft weitergebildet, mittels welchem die Geräteaufnahme oder ein in der Geräteaufnahme fixiertes mobiles Endgerät von einer Aufnahmeposition in eine Passivposition bewegbar ist. Der Bewegungsmechanismus kann ein Schwenkmechanismus sein, mittels welchem die Geräteaufnahme oder ein in der Geräteaufnahme fixiertes mobiles Endgerät von der Aufnahmeposition in die Passivposition verschwenkbar ist. In der Aufnahmeposition ist das mobile Endgerät derart ausgerichtet, dass mittels der Kamera Bildaufnahmen von einem Aufnahmebereich innerhalb der Saatgutförderleitung erzeugbar sind. In der Passivposition ist das mobile Endgerät oder eine Linse oder ein Linsensystem der Kamera des mobilen Endgeräts beabstandet von der Saatgutförderleitung positioniert. Die Linse oder das Linsensystem der Kamera des mobilen Endgeräts ist beispielsweise nur kurzzeitig während eines Aufnahmevorgangs oder während mehrerer Aufnahmevorgänge in einer Aufnahmeposition über einer Öffnung der Saatgutförderleitung platziert. Danach wird das mobile Endgerät in die Passivposition bewegt, insbesondere geschwenkt und ist nicht mehr der Verschmutzung ausgesetzt. Während des Schwenkvorgangs kann mittels einer Reinigungsvorrichtung der Haltevorrichtung eine Reinigung durchgeführt werden, zum Beispiel mit einer feinen Bürste oder einem Tuch oder mit einem Reinigungsmittel. Beim Schwenkvorgang kann die Öffnung in der Saatgutförderleitung selbsttätig verschlossen werden. Die Haltevorrichtung kann ferner eine bewegliche Schutzklappe, Schutzscheibe oder Schutzblende umfassen, welche im Bereich der Linse oder des Linsensystems der Kamera des mobilen Endgeräts angeordnet ist. Die Schutzklappe, Schutzscheibe oder Schutzblende kann dazu eingerichtet sein, die Linse oder das Linsensystem der Kamera nur kurzzeitig über eine Freigabebewegung freizugeben. Die Freigabebewegung kann eine Schwenkbewegung sein. Für den Schwenkvorgang kann ein elektrischer, hydraulischer, pneumatischer oder mechanischer Antrieb eingesetzt werden. Die Schutzklappe, Schutzscheibe oder Schutzblende kann während der Freigabebewegung durch eine integrierte Reinigungsvorrichtung gereinigt werden.

In einer weiteren bevorzugten Ausführungsform der Haltevorrichtung ist die Haltevorrichtung als Befestigungsbox ausgebildet oder umfasst eine Befestigungsbox, wobei das mobile Endgerät innerhalb der Befestigungsbox befestigbar ist. Die Befestigungsbox sorgt dafür, dass eine feste Verbindung mit der Saatgutförderleitung und ein Mindestabstand zur Saatgutförderleitung entsteht. Dies erlaubt die Erzeugung von scharfen Bildaufnahmen. Eine Verschmutzung und Beschädigung des mobilen Endgeräts wird durch die Befestigungsbox verhindert.

Die Saatgutförderleitung kann einen leitungsinternen Förderpfad für das Saatgut umschließen, wobei die Leitungsbewandung der Saatgutförderleitung ein Aufnahmefenster aufweist, über welches ein sich innerhalb der Saatgutförderleitung befindender Aufnahmebereich von außerhalb der Saatgutförderleitung einsehbar ist, sodass über das Aufnahmefenster mittels einer Kamera eines außerhalb der Saatgutförderleitung angeordneten mobilen Endgeräts Bildaufnahmen von dem Aufnahmebereich erzeugbar sind.

Durch das Aufnahmefenster können mittels des mobilen Endgeräts Bildaufnahmen des Saatflusses gemacht werden, sodass über eine Auswertung der Bildaufnahmen eine Körnerzählung umgesetzt wird.

Die Saatgutförderleitung wird dadurch vorteilhaft weitergebildet, dass die Leitungsbewandung im Bereich des Aufnahmefensters durchsichtig ausgebildet ist. Alternativ oder zusätzlich ist das Aufnahmefenster als Aufnahmeöffnung ausgebildet. Die Leitungsbewandung kann im Bereich des Aufnahmefensters transparent ausgebildet sein. Die Linse oder das Linsensystem der Kamera kann durch eine durchsichtige Abdeckung geschützt sein. Die Abdeckung kann manuell oder automatisch gesäubert oder erneuert werden. Die Aufnahmeöffnung in der Saatgutförderleitung kann durch eine durchsichtige Folie verschlossen sein. Die Folie kann erneuerbar sein. Die Aufnahmeöffnung in der Saatgutförderleitung kann durch einen Folienstapel mehrerer durchsichtiger Folien verschlossen sein, wobei die Folien des Folienstapels abreißbar sein können. Durch erneuerbare Folien können die Bildaufnahme beeinträchtigende Partikel, wie etwa Staubpartikel oder Beize, vom Aufnahmefenster entfernt werden.

In einer anderen Ausführungsform der Saatgutförderleitung weist die Leitungsbewandung einen durch das Aufnahmefenster einsehbaren innenliegenden Bewandungsflächenabschnitt auf, welcher eine von benachbarten und nicht durch das Aufnahmefenster einsehbaren innenliegenden Bewandungsflächenabschnitten abweichende Kontrastfarbe aufweist. Der einsehbare innenliegende Bewandungsflächenabschnitt kann alternativ oder zusätzlich strahlungsreflektierend ausgebildet sein und/oder als Leuchtflächenabschnitt ausgebildet sein. Der durch das Aufnahmefenster einsehbare innenliegende Bewandungsflächenabschnitt dient bei Bildaufnahmen als Hintergrund. Der durch das Aufnahmefenster einsehbare innenliegende Bewandungsflächenabschnitt kann farblich abgesetzt sein. An der Saatgutförderleitung kann eine externe Beleuchtungseinheit zur Beleuchtung des Aufnahmebereichs angeordnet sein. Die externe Beleuchtungseinheit kann alternativ oder zusätzlich zur Beleuchtungs- und/oder Blitzlichteinrichtung des mobilen Endgeräts zur Ausleuchtung des einsehbaren innenliegenden Bewandungsflächenabschnitts eingesetzt werden.

In einer weiteren bevorzugten Ausführungsform der Saatgutförderleitung ist der Leitungsquerschnitt im Aufnahmebereich der Saatgutförderleitung gegenüber angrenzenden Leitungsabschnitten vergrößert. Alternativ oder zusätzlich sind innerhalb des Aufnahmebereichs ein oder mehrere Leitelemente angeordnet, welche dazu eingerichtet sind, die den Aufnahmebereich passierenden Körner zu lenken und/oder zu führen. Die Saatgutförderleitung ist konstruktiv so ausgelegt, dass sich der Saatgutstrom auffächert, ohne dass sich der Saatfluss verändert. Bei mechanischen Sämaschinen wird auf diese Weise ein Rückstau verhindert. Bei pneumatischen Sämaschinen wird auf diese Weise ein Druckabfall verhindert. Durch den vergrößerten Leitungsquerschnitt im Aufnahmebereich wird der Saatgutstrom aufgefächert. Die einzelnen Saatkörner werden dabei über eine breitere Fläche geführt, sodass die Schichtdicke dünner wird. Die Wahrscheinlichkeit einer gegenseitigen Abdeckung von Körnern wird somit erheblich verringert. Die Leitelemente können Leitstege oder Leitbleche sein. Die Innenkontur der Saatgutförderleitung kann im Aufnahmebereich oder im Nahbereich des Aufnahmebereichs zur Auffächerung des Saatgutstroms wellenförmig ausgebildet sein. Die Auffächerungsstrecke ist so ausgelegt, dass es bei mechanischen Sämaschinen nicht zu einer Verstopfung kommt und dass bei pneumatischen Sämaschinen der Druckabfall des Luftstroms im Verlauf der Auffächerungsstrecke dem Druckabfall der vergleichbaren Saatgutförderleitung entspricht.

In einer anderen Ausführungsform weist die Saatgutförderleitung einen Schließmechanismus auf, mittels welchem das Aufnahmefenster der Leitungsbewandung abdeckbar und/oder verschließbar ist. Die Linse oder das Linsensystem der Kamera des mobilen Endgeräts kann hierdurch nur temporär während des Aufnahmevorgangs im Bereich des Aufnahmefensters positioniert sein. Nach Beendigung des Aufnahmevorgangs wird das mobile Endgerät dann von einer Aufnahmeposition in eine Passivposition bewegt, insbesondere verschwenkt. Durch das Bewegen des mobilen Endgeräts von der Aufnahmeposition in die Passivposition kann dann eine Betätigung des Schließmechanismus zum Abdecken und/oder Verschließen des Aufnahmefensters veranlasst werden. Durch das Bewegen des mobilen Endgeräts von der Passivposition in die Aufnahmeposition kann eine Betätigung des Schließmechanismus zum Öffnen des Aufnahmefensters veranlasst werden.

Die der Erfindung zugrundeliegende Aufgabe wird durch ein Erfassungssystem gemäß Anspruch 1 gelöst.

Das erfindungsgemäße Erfassungssystem ist vorzugsweise modular aufgebaut. Mit dem in der Haltevorrichtung befestigten mobilen Endgerät ist es möglich, die pro Zeiteinheit dosierten Saatkörner, das heißt beispielsweise eine Wertangabe in Körnern pro Sekunde, zu ermitteln. Die Haltevorrichtung kann austauschbar sein, damit beispielsweise eine endgerätespezifische Haltevorrichtung verwendet werden kann. Auf der Saatgutförderleitung kann sich ein Aufsatz befinden, um die Kamera des mobilen Endgeräts weiter von dem Aufnahmebereich zu beabstanden, sodass eine Fokussierung des Aufnahmebereichs problemlos möglich ist.

Das erfindungsgemäße Erfassungssystem wird ferner durch ein mobiles Endgerät vorteilhaft weitergebildet, wobei das mobile Endgerät eine Kamera zum Erzeugen von Bildaufnahmen eines sich innerhalb der Saatgutförderleitung befindenden Aufnahmebereichs der Saatgutförderleitung aufweist und auf welchem eine Kornerfassungsanwendung zum Erzeugen und/oder Verwalten von Bildaufnahmen des Aufnahmebereichs installiert ist. Das mobile Endgerät dient als Messvorrichtung. Das mobile Endgerät kann ein Mobilfunkgerät, insbesondere ein Smartphone, sein. Das mobile Endgerät kann eine Beleuchtungs- und/oder Blitzeinrichtung aufweisen, welche während des Erzeugens der Bildaufnahmen von der Kornerfassungsanwendung gesteuert wird. Die Kornerfassungsanwendung kann zum Erzeugen der Bildaufnahmen die Kamera dazu veranlassen, Einzelaufnahmen, Serienaufnahmen und/oder Videoaufnahmen zu erzeugen. Das mobile Endgerät kann mit einem spezifischen Kameramodul ausgestattet sein. Die Kamera des Kameramoduls kann beispielsweise eine Zeilenkamera sein, um bei sehr schnellen Kornflugzeiten auch wirklich jedes Korn messen zu können. Das mobile Endgerät kann eine Makrofotografie-Optik aufweisen, sodass die Kamera vergleichsweise nah an dem abzulichtenden Objekt positioniert werden kann. Das Kameramodul kann auch über eine Funkschnittstelle an das mobile Endgerät gekoppelt sein. Das mobile Endgerät kann dazu eingerichtet sein, einen Alarm zu melden, wenn eine Verstopfung der Saatgutförderleitung erkannt wird.

Das erfindungsgemäße Erfassungssystem wird ferner durch eine Auswerteeinrichtung weitergebildet, welche dazu eingerichtet ist, eine oder mehrere durch die Kamera des mobilen Endgeräts erzeugte Bildaufnahmen des Aufnahmebereichs zum Erfassen der den Aufnahmebereich passierenden Saatkörner auszuwerten. Die Auswerteeinrichtung kann dazu eingerichtet sein, die Anzahl der den Aufnahmebereich pro Sekunde passierenden Saatkörner zu ermitteln. Die Auswerteeinrichtung kann dazu eingerichtet sein, bei der Saatflussermittlung die gegenseitige Abdeckung von Saatkörnern nach statistischen Gesichtspunkten zu berücksichtigen. Die Auswerteeinrichtung kann berücksichtigen, dass die gegenseitige Abdeckung der Saatkörner mit Zunahme des Saatgutflusses ansteigt. Die Auswerteeinrichtung kann Bestandteil des mobilen Endgeräts sein. Die Auswerteeinrichtung kann auch separat von dem mobilen Endgerät ausgebildet sein. Die Kornerfassungsanwendung auf dem mobilen Endgerät veranlasst vorzugsweise die Bereitstellung bzw. die Versendung der einen oder der mehreren Bildaufnahmen. Die eine oder die mehreren Bildaufnahmen können über Funk, insbesondere über Mobilfunk oder Bluetooth, und/oder über das Internet an die Auswerteeinrichtung versendet werden. Die Auswerteeinrichtung kann eine elektronische Anzeige- und/oder Bedieneinheit für die Sämaschine, beispielsweise ein Terminal, insbesondere ein ISOBUS-Terminal, sein. Die Auswerteeinrichtung kann Bestandteil eines Bordcomputers oder eines Leitstellencomputers sein. Das mobile Endgerät kann als Bordcomputer eingesetzt werden. Die Kornerfassungsanwendung auf dem mobilen Endgerät kann in diesem Fall auch dazu eingerichtet sein, die Bewegungsgeschwindigkeit des mobilen Endgeräts und/oder der Sämaschine, die Position des mobilen Endgeräts und/oder der Sämaschine, Abstände des mobilen Endgeräts und/oder der Sämaschine zu Bereichen auf der landwirtschaftlichen Fläche und/oder Neigungen des mobilen Endgeräts und/oder der Sämaschine zu erfassen oder zu bestimmen. Die Bildaufnahmen können auf dem mobilen Endgerät zwischengespeichert werden. Das Erfassungssystem kann auch zwei miteinander kommunizierende mobile Endgeräte umfassen. Ein mobiles Endgerät könnte beispielsweise als Körnerzähler verwendet werden, wobei das andere mobile Endgerät als Bordcomputer dient.

In einer anderen bevorzugten Ausführungsform des erfindungsgemäßen Erfassungssystems ist die Auswerteeinrichtung dazu eingerichtet, beim Erfassen der den Aufnahmebereich passierenden Saatkörner einen oder mehrere aktuelle Einstellparameter der Sämaschine zu berücksichtigen. Durch eine Berücksichtigung eines oder mehrere aktueller Einstellparameter der Sämaschine kann die Auswertungsgüte verbessert werden und/oder der von der Auswerteeinrichtung ermittelte Saatgutfluss auf Plausibilität geprüft werden. Die von der Auswerteeinrichtung berücksichtigen Einstellparameter können beispielsweise die Drehzahl eines rotierend angetriebenen Saatgutdosierers der Sämaschine, die Größe einer Dosierwelle der Sämaschine und/oder bei pneumatischer Förderung auch die Lüfterdrehzahl eines Lüfters der Sämaschine betreffen.

In einer anderen bevorzugten Ausführungsform des erfindungsgemäßen Erfassungssystems ist die Auswerteeinrichtung dazu eingerichtet, in der einen oder den mehreren Bildaufnahmen eine durch Bewegungsunschärfe entstehende Bewegungsspur zumindest eines Saatkorns zu erfassen und die Bewegungsspur des Saatkorns zum Erfassen der Bewegungsgeschwindigkeit und/oder der Bewegungsrichtung des den Aufnahmebereich passierenden Saatkorns auszuwerten. Die Auswertung der Bewegungsspur kann das Ermitteln der Spurlänge und/oder der Spurausrichtung umfassen.

Das erfindungsgemäße Erfassungssystem weist einen Geschwindigkeitsmesssensor auf, mittels welchem Korngeschwindigkeiten der den Aufnahmebereich passierenden Saatkörner messbar sind. Die Auswerteeinrichtung ist dazu eingerichtet, die eine oder die mehreren durch die Kamera des mobilen Endgeräts erzeugten Bildaufnahmen des Aufnahmebereichs zum Erfassen der Menge an während einer Zeiteinheit den Aufnahmebereich passierenden Saatkörnern unter Berücksichtigung der mittels des Geschwindigkeitsmesssensors gemessenen Korngeschwindigkeiten auszuwerten. Die Auswerteeinrichtung und der Geschwindigkeitsmesssensor können datenübertragend miteinander verbunden sein. Mit dem mobilen Endgerät kann beispielsweise eine Einzelaufnahme von dem dosierten Saatgutstrom gemacht werden. Gleichzeitig wird mit dem Geschwindigkeitsmesssensor die Geschwindigkeit des Saatgutstroms gemessen. Der Geschwindigkeitsmesssensor kann beispielsweise ein Radarsensor sein, der nach dem Doppler-Prinzip arbeitet. Beide Datenpakete, also die Bilddaten und die Geschwindigkeitsdaten, werden dann beispielsweise durch die Auswerteeinrichtung miteinander verknüpft, sodass sich die Anzahl der Körner pro Sekunde berechnen lassen. Alternativ oder zusätzlich können zwei Einzelaufnahmen mit einem sehr kleinen Zeitabstand gemacht werden. Durch Überblenden der Aufnahmen ist es möglich, die Verlagerung des Saatkorns bzw. der Saatkörner zu identifizieren. Mit dem Verlagerungsabstand, welcher über einen Längenmaßstab ermittelt wird und dem Zeitabstand der Einzelaufnahmen lassen sich die Bewegungsgeschwindigkeiten der Saatkörner berechnen. Die Bewegungsgeschwindigkeiten und Anzahl der Saatkörner ergeben die Dosierrate in Körnern pro Sekunde.

Die der Erfindung zugrundeliegende Aufgabe wird ferner durch ein Verfahren zum Erfassen von Saatkörnern gemäß Anspruch 7 gelöst. Das Verfahren wird vorzugsweise mit einem Erfassungssystem nach einer der vorstehend beschriebenen Ausführungsformen ausgeführt. Hinsichtlich der Vorteile und Modifikationen des erfindungsgemäßen Verfahrens wird somit zunächst auf die Vorteile und Modifikationen des erfindungsgemäßen Erfassungssystems verwiesen.

Das Verfahren kann das Befestigen, insbesondere das zerstörungsfrei lösbare Befestigen, einer Befestigungsvorrichtung der Haltevorrichtung an der Saatgutförderleitung und/oder einem Säschar umfassen. Die Genauigkeit lässt sich weiter verbessern, wenn gleichzeitig mehrere, beispielsweise zwei, mobile Endgeräte Bildaufnahmen von einem sich innerhalb der Saatgutförderleitung befindenden Aufnahmebereich der Saatgutförderleitung erzeugen. Das zweite mobile Endgerät kann beispielsweise rechtwinklig zum ersten mobilen Endgerät auszugerichtet sein.

Das erfindungsgemäße Verfahren wird ferner dadurch vorteilhaft weitergebildet, dass die eine oder die mehreren Bildaufnahmen ausgewertet werden, insbesondere mittels einer auf dem mobilen Endgerät installierten Kornerfassungsanwendung. Das Auswerten erfolgt vorzugsweise zum Erfassen von den Aufnahmebereich der Saatgutförderleitung passierenden Saatkörnern. Beim Auswerten der einen oder der mehreren Bildaufnahmen wird vorzugsweise der Saatgutfluss in Körnern pro Sekunde ermittelt. Beim Auswerten der einen oder der mehreren Bildaufnahmen können auch die Bewegungsgeschwindigkeit eines oder mehrerer Saatkörner und/oder die Bewegungsrichtung eines oder mehrerer Saatkörner ermittelt werden. Es kann passieren, dass sich die Saatkörner gegenseitig abdecken. Die Gefahr der Abdeckung nimmt mit größer werdender Dosiermenge zu. Beim Auswerten der einen oder der mehreren Bildaufnahmen kann unter Berücksichtigung eines, beispielsweise statistischen, Abdeckfaktors die Kornabdeckung berücksichtigt werden, beim Auswerten der einen oder der mehreren Bildaufnahmen wird vorzugsweise der Abdeckungsgrad bewertet, sodass der Abdeckungsgrad bei der Auswertung der Bildaufnahmen der Kamera und der anschließenden Berechnung der dosierten Saatkörner berücksichtigt wird. Weiterhin ist es möglich, dass beispielsweise zwei Körner direkt aneinander liegen. Unter Berücksichtigung des Körnergrößenspektrums kann dies beim Auswerten der einen oder der mehreren Bildaufnahmen erkannt werden.

In einer anderen bevorzugten Ausführungsform des erfindungsgemäßen Verfahrens wird beim Auswerten der einen oder der mehreren Bildaufnahmen eine durch Bewegungsunschärfe entstehende Bewegungsspur zumindest eines Saatkorns erfasst und die Bewegungsspur des Saatkorns wird zum Erfassen der Bewegungsgeschwindigkeit und/oder der Bewegungsrichtung des den Aufnahmebereich passierenden Saatkorns ausgewertet. Das Auswerten der Bewegungsspur kann das Ermitteln der Spurlänge und/oder Spurausrichtung umfassen.

Bei dem erfindungsgemäßen Verfahren werden die Korngeschwindigkeiten der den Aufnahmebereich passierenden Saatkörnern mittels eines Geschwindigkeitsmesssensors gemessen. Die eine oder die mehreren durch die Kamera des mobilen Endgeräts erzeugten Bildaufnahmen des Aufnahmebereichs werden zum Erfassen der Menge an während einer Zeiteinheit den Aufnahmebereich passierenden Saatkörnern unter Berücksichtigung der mittels des Geschwindigkeitsmesssensors gemessenen Korngeschwindigkeiten ausgewertet.

Bevorzugt ist ferner ein Verfahren, bei welchem eine auf dem mobilen Endgerät installierte Kornerfassungsanwendung die Kamera des mobilen Endgeräts dazu veranlasst, die eine oder die mehreren Bildaufnahmen zu erzeugen. Alternativ oder zusätzlich kann die auf dem mobilen Endgerät installierte Kornerfassungsanwendung die Kamera des mobilen Endgeräts dazu veranlassen, beim Erzeugen der einen oder der mehreren Bildaufnahmen eine oder mehrere Einzelaufnahmen, eine oder mehrere Serienaufnahmen und/oder eine oder mehrere Videoaufnahmen des Aufnahmebereichs zu machen. Alternativ oder zusätzlich kann die auf dem mobilen Endgerät installierte Kornerfassungsanwendung eine Beleuchtungs- und/oder Blitzlichteinrichtung des mobilen Endgeräts beim Erzeugen der einen oder der mehreren Bildaufnahmen zum Ausleuchten des Aufnahmebereich aktivieren. Grundsätzlich ist zu beachten, dass sich die Bewegungsgeschwindigkeiten der Saatkörner bei mechanischen und pneumatischen Sämaschinen deutlich voneinander unterscheiden. Bei mechanischen Sämaschinen bewegen sich die Saatkörner vergleichsweise langsam, wobei sich die Saatkörner bei pneumatischen Sämaschinen vergleichsweise schnell bewegen. Eine Einzelaufnahme erlaubt die Schnellerfassung des Saatgutstroms. Da die Einzelaufnahme jedoch nur einen kurzen Ausschnitt des Saatgutstroms widerspiegelt und keinen direkten Rückschluss auf die Bewegungsgeschwindigkeit des Saatgutstroms zulässt, ist die Aussagekraft nur eingeschränkt brauchbar. Das Auswerten einer Einzelaufnahme könnte zu dem Ergebnis führen, dass nur zwei Körner pro Sekunde pro Saatleitung dosiert werden, wohingegen die Auswertung anderer Bildaufnahmen darauf hinweisen, dass zwei oder vier Saatkörner pro Sekunde pro Saatleitung dosiert werden. Die Auswertung mehrere Einzelaufnahmen oder Serienaufnahmen können das Ergebnis also entsprechend verbessern. Die Einzelaufnahme bildet nur die augenblickliche Aufnahme der Körner indem untersuchten Ausschnitt des Saatgutstroms ab. Die Bewegungsgeschwindigkeit der Körner wird damit nicht zwangsläufig erkannt. Es muss eine Zuordnung zwischen Anzahl der Saatkörner und Bewegungsgeschwindigkeit erfolgen. Bei einer Serienaufnahme werden mehreren Bildaufnahmen kurzzeitig hintereinander gemacht. Aus der Zeitspanne der Aufnahmeserien und den auf den Einzelbildern gezählten Körnern lässt sich der Saatgutstrom in Körner pro Sekunde berechnen. Durch mehrere nacheinander folgende Serienaufnahmen kann die Genauigkeit erhöht werden. Gegebenenfalls kann ein statistischer Mittelwert gebildet werden.

Aus der Zeitspanne der Aufnahmeserie und den auf den Einzelbildern gezählten Körnern lässt sich der Saatgutstrom in Körner pro Sekunde berechnen. Durch mehrere nacheinander folgende Serienaufnahmen und eine Mittelwertbildung kann die Genauigkeit erhöht werden. Abhängig von den Bewegungsgeschwindigkeiten der Saatkörner und der Zeitfolge bei der Serienaufnahme werden einzelne Saatkörner mehrfach, beispielsweise doppelt, oder gar nicht erfasst. Bei langsamen Bewegungsgeschwindigkeiten der Saatkörner, insbesondere bei mechanischen Sämaschinen, ist es möglich, dass einzelne Saatkörner von zwei oder mehreren zeitlich hintereinander erzeugten Bildaufnahmen erfasst werden. Die Auswerteeinrichtung kann im Rahmen der Bildauswertungsroutine doppelt erfasste Saatkörner identifizieren. Das ist beispielsweise möglich, da sich die einzelnen Saatkörner in Form, Größe, Oberfläche und anderen Eigenschaften voneinander unterscheiden. Die Auswerteeinrichtung muss jedoch berücksichtigen, dass die Körner während der Bewegung ihre Lage verändern und bestimmte Merkmale nicht erfasst werden und somit eine Identifizierung von Saatkörnern erschwert wird. Werden in unterschiedlichen Bildaufnahmen identische Saatkörner erfasst, lässt sich über den zeitlichen Abstand der Bildaufnahmen auch die Bewegungsgeschwindigkeit der Saatkörner direkt berechnen. Bei sehr hohen Bewegungsgeschwindigkeiten der Saatkörner ist es möglich, dass einzelne Saatkörner von den Bildaufnahmen nicht erfasst werden. Ferner kann die Auswerteeinrichtung auch einzelne Saatkörner in den Bildaufnahmen identifizieren und verfolgen. Dabei steigt die Wahrscheinlichkeit, dass jedes Saatkorn einmal einzeln abgebildet ist, mit zunehmender Größe des Bildausschnitts an. Bei ausreichend großem Bildausschnitt kann die Auswerteeinrichtung auf diese Weise auch die wahre Anzahl an Saatkörnern ermitteln. Zusätzlich zu der Bildauswertung lassen sich Gesetzmäßigkeiten erstellen, die diese Messfehler ausgleichen. Das kann geschehen, indem experimentelle Untersuchungen, beispielsweise basierend auf statistischen Auswertungen, durchgeführt werden oder auch künstliche Intelligenz eingesetzt wird. Wenn im Rechner bestimmte Eigenschaften der Saatgutart hinterlegt sind und sich dem geförderten Saatgut zuordnen lassen, lässt sich die Auswertung aufwerten. Beispielsweise wird mit den Bildaufnahmen des mobilen Endgeräts die Kornform und die Kornoberfläche bestimmt. Ein Rückschluss auf die Luftwiderstandsbeiwerte ist möglich. Durch Versuche wird ermittelt, wie groß die tatsächlichen mittleren Relativgeschwindigkeiten zwischen den Körnern sind. Hierzu kann das Profil der Schwebegeschwindigkeiten ermittelt werden. Bei Haferkörnern sind die Abweichungen beispielsweise größer als bei den kugelförmigen Rapskörnern. Die Auswertung der Bildaufnahmen des mobilen Endgeräts und die Messwerte des Geschwindigkeitsmesssensors verknüpft mit den Gesetzmäßigkeiten der experimentellen Untersuchung ergeben einen hochgenauen Wert für die Anzahl der Saatkörner pro Sekunde. Die Bewegungsgeschwindigkeiten der Saatkörner bei pneumatischen Sämaschinen hängen ab von der fördernden Luftgeschwindigkeit im Saatleitungsrohr und den Strömungsgeschwindigkeiten der Saatkörner. Bei pneumatischen Sämaschinen unterscheiden sich die Bewegungsgeschwindigkeiten der Saatkörner in der Saatleitung deutlich voneinander. Das liegt unter anderem daran, dass die Saatkörner nicht gleichmäßig geformt und unterschiedlich groß sind. Hinzu kommt, dass das Strömungsprofil in der Saatleitung ungleichförmig ist. Ein leichtes, kugelförmiges Rapskorn hat eine andere Bewegungsgeschwindigkeit als das ungleichförmige Weizenkorn. Ein stirnseitig angeströmtes Haferkorn hat eine niedrigere Bewegungsgeschwindigkeit im Luftstrom als ein seitlich angeströmtes Haferkorn. Ein Maß für die Strömungseigenschaft ist beispielsweise die Schwebegeschwindigkeit. Aus einer Videoaufnahme lassen sich die Bewegungsgeschwindigkeit und die Zahl der Körner entnehmen. Die gegenseitige Abdeckung ist bei Videoaufnahmen gering, da sich die Saatkörner zueinander bewegen. Die gegenseitige Abdeckung ist bei pneumatischen Sämaschinen geringer als bei mechanischen Sämaschinen, da durch eine hohe Bewegungsgeschwindigkeit der Saatgutstrom auseinandergezogen wird. Aus einer Videoaufnahme, die den Bewegungsverlauf der einzelnen Saatkörner aufzeichnet, lassen sich die Bewegungsgeschwindigkeiten der Saatkörner und die Zahl der Körner entnehmen.

Die eine oder die mehreren Bildaufnahmen können während der Saatgutausbringung auf einer landwirtschaftlichen Nutzfläche, beispielsweise während einer Kalibrierphase erzeugt werden. Die Erzeugung von Bildaufnahmen kann ferngesteuert, kabelgebunden oder drahtlos ausgelöst werden, beispielsweise über eine mit dem mobilen Endgerät verbundene Smartwatch oder über eine mit dem mobilen Endgerät verbundene Anzeige- und Bedieneinheit, etwa über ein Terminal, insbesondere ein ISOBUS-Terminal. Die Erzeugung von Bildaufnahmen kann automatisch ausgelöst werden. Die Erzeugung von Bildaufnahmen kann über eine Funksteuerung ausgelöst werden.

Die Erzeugung von Bildaufnahmen kann durch eine Datenverbindung, beispielsweise eine Kabel- oder Funkverbindung, ausgelöst werden.

In einer anderen bevorzugten Ausführungsform des erfindungsgemäßen Verfahrens erfolgt das Erzeugen der einen oder der mehreren Bildaufnahmen mittels der Kamera des mobilen Endgeräts durch ein Aufnahmefenster einer einen leitungsinternen Förderpfad für das Saatgut umschließenden Leitungsbewandung der Saatgutförderleitung, über welches der Aufnahmebereich von außerhalb der Saatgutförderleitung einsehbar ist.

Die der Erfindung zugrundeliegende Aufgabe wird ferner durch ein Verfahren zum Einstellen einer Dosiervorrichtung gemäß Anspruch 18 gelöst. Hinsichtlich der Vorteile und Modifikationen des erfindungsgemäßen Verfahrens zum Einstellen einer Dosiervorrichtung wird somit zunächst auf die Vorteile und Modifikationen des erfindungsgemäßen Verfahrens zum Erfassen von Saatkörnern verwiesen.

Das Einstellen der berechneten Einstellmenge kann automatisch über eine Steuerungseinrichtung oder manuell erfolgen. Das Erfassen von Saatkörnern in der Saatgutförderleitung, das Berechnen der Einstellwerte und das Einstellen der Einstellwerte erfolgt vorzugsweise während einer Kalibrierphase zu Beginn eines Ausbringvorgangs. Die Verschmutzung des mobilen Endgeräts wird erheblich reduziert, wenn dieses nur während der Kalibrierphase zur Kornerfassung genutzt wird. Der Bordcomputer regelt dann die Ausbringmenge nach dem Kalibriervorgang entsprechend einer eigens erstellten Dosierfunktion. Alternativ kann das mobile Endgerät während des gesamten Ausbringvorgangs die Körner in der Saatgutförderleitung erfassen. In der Kalibrierphase kann die Dosierung so eingestellt sein, dass nur entlang einer Reihe Saatgut abgegeben wird. Um die Ablage des Saatguts auf der landwirtschaftlichen Nutzfläche während der Kalibrierphase zu verhindern, kann beispielsweise ein Eimer direkt unter die der Reihe zugeordnete Ablageeinrichtung gehängt werden, um das Saatgut aufzufangen. Alternativ kann auch ein Saatgutrohr verschwenkt werden, um die Kalibriervorgang auch im eingesetzten Zustand durchführen zu können. Neben dem als Körnerzähler eingesetzten mobilen Endgerät kann ein zweites mobiles Endgerät zum Einsatz kommen. Alternativ wird das mobile Endgerät nach dem Kalibriervorgang aus der Haltevorrichtung entnommen und auf der Sämaschine als Bordcomputer genutzt. Mit dem Auswerteergebnis der Körnerzählfunktion kann ein Kennwert für die Dosierfunktion, die unter anderem von der Drehzahl der Dosiereinrichtung abhängt, ermittelt werden. Das mobile Endgerät kann die folgenden Funktionen übernehmen: sensorischer Körnerzähler, Steuerung der Variation der Ausbringmenge, Steuerung einer Parallelfahrsystemfunktion, Steuerung einer Fahrgassenschaltung, Steuerung einer Teilbreitenschaltung, Berechnung hinsichtlich Nachfüllen und Restmenge und/oder Dokumentation von Arbeitsdaten, Ausbringmenge, auch georeferenziert, Klimadaten und/oder Geländeeigenschaften.

Auf dem mobilen Endgerät sind dann dafür eine oder mehrere Anwendungen mit Bedien- und Regelfunktion installiert, die eine Nutzung wie ein Bordcomputer ermöglichen. Ebenso ist es möglich, einen telemetrischen Datenaustausch zu realisieren. Dabei wird zwischen Maschine und zentraler Leitstelle eine beidseitige Kommunikationsebene geschaffen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Säaggregat mit einem erfindungsgemäßen Erfassungssystem in einer schematischen Seitenansicht;
- Fig. 2A: ein erfindungsgemäßes Erfassungssystem in einer schematischen Schnittdarstellung;
- Fig. 2B: ein weiteres erfindungsgemäßes Erfassungssystem in einer schematischen Schnittdarstellung;
- Fig. 3: einen Abschnitt einer erfindungsgemäßem Saatgutförderleitung in einer schematischen Schnittdarstellung;
- Fig. 4A: eine erfindungsgemäße Haltevorrichtung in einer schematischen Darstellung;
- Fig. 4B: eine weitere erfindungsgemäße Haltevorrichtung in einer schematischen Darstellung;
- Fig. 5: ein erfindungsgemäßes Erfassungssystem in einer schematischen Darstellung;
- Fig. 6: von einem mobilen Endgerät erzeugte Bildaufnahmen, welche im Rahmen des erfindungsgemäßen Verfahrens ausgewertet werden;
- Fig. 7: von einem mobilen Endgerät erzeugte Bildaufnahmen, welche im Rahmen des erfindungsgemäßen Verfahrens ausgewertet werden;
- Fig. 8: von einem mobilen Endgerät erzeugte Bildaufnahmen, welche im Rahmen des erfindungsgemäßen Verfahrens ausgewertet werden;
- Fig. 9A: ein erfindungsgemäßes Erfassungssystem in einer schematischen Schnittdarstellung;
- Fig. 9B: ein weiteres erfindungsgemäßes Erfassungssystem in einer schematischen Schnittdarstellung;
- Fig. 9C: ein weiteres erfindungsgemäßes Erfassungssystem in einer schematischen Schnittdarstellung;
- Fig. 10: eine von einem mobilen Endgerät erzeugte Bildaufnahme, welche im Rahmen des erfindungsgemäßen Verfahrens ausgewertet wird;
- Fig. 11: ein weiteres erfindungsgemäßes Erfassungssystem in einer schematischen Schnittdarstellung;
- Fig. 12: ein weiteres erfindungsgemäßes Erfassungssystem in einer schematischen Darstellung;
- Fig. 13: ein weiteres erfindungsgemäßes Erfassungssystem in einer schematischen Darstellung; und
- Fig. 14: den Funktionsumfang eines erfindungsgemäßen Erfassungssystems in einer schematischen Darstellung.

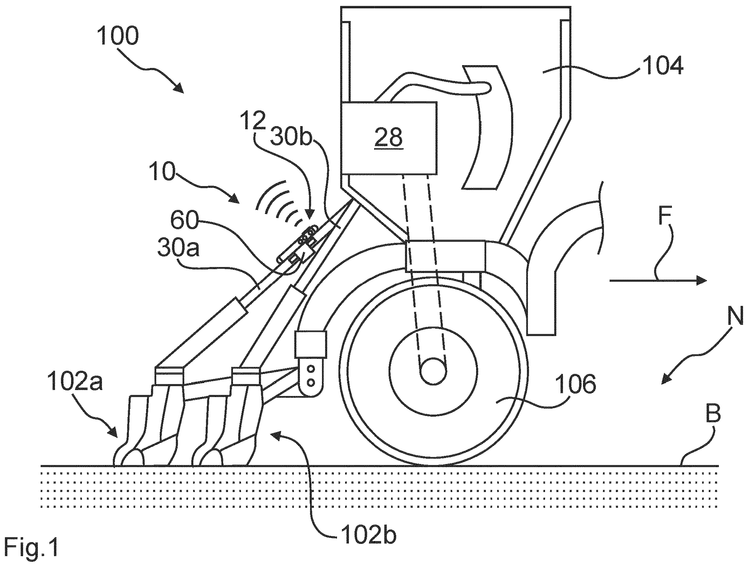

Die Fig. 1 zeigt ein Säaggregat 100 einer Sämaschine 200. Mittels des Säaggregats 100 können Saatkörner S auf den Boden B einer landwirtschaftlichen Nutzfläche abgelegt werden. Das dargestellte Säaggregat 100 bewegt sich in Fahrtrichtung F über die landwirtschaftliche Nutzfläche. Das Saatgut S wird innerhalb des Vorratsbehälters 104 mitgeführt und über die Dosiervorrichtung 28 in die Saatgutförderleitungen 30a, 30b eindosiert. Über die Saatgutförderleitungen 30a, 30b wird das Saatgut S zu den Säscharen 102a, 102b gefördert. Die Säschare 102a, 102b sind als Zinkenschare ausgebildet. Das Säaggregat 100 weist ferner eine Schneidscheibe 106 auf, welche eine Ablagefurche in dem Boden B erzeugt. Die hinter der Schneidscheibe 106 laufenden Säschare 102a, 102b dienen zum Ausformen der geöffneten Furche und zum Ablegen des Saatguts S in die ausgeformte Furche.

Die Saatgutförderleitung 30a ist Bestandteil eines Erfassungssystems 10, mittels welchem Saatkörner S innerhalb der Saatgutförderleitung 30a erfasst werden können. Das Erfassungssystem 10 umfasst ferner eine Haltevorrichtung 60, über welche das ebenfalls zu dem Erfassungssystem 10 gehörende mobile Endgerät 12 zerstörungsfrei lösbar an der Saatgutförderleitung 30a befestigt ist. Mit dem in der Haltevorrichtung 60 befestigten mobilen Endgerät 12 ist es möglich, die pro Zeiteinheit dosierten Saatkörner S zu ermitteln, beispielsweise in der Form Körner pro Sekunde. Das mobile Endgerät 12 ist ein Mobilfunkgerät, nämlich ein Smartphone, und dient als Messvorrichtung.

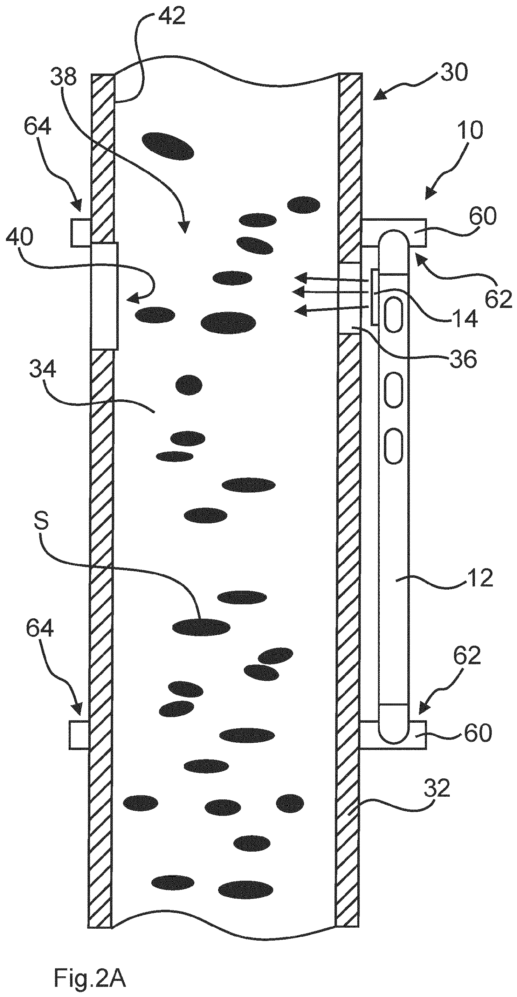

Die Fig. 2A zeigt eine Ausführungsform eines Erfassungssystems 10 mit einer Saatgutförderleitung 30, einer Haltevorrichtung 60 und einem mobilen Endgerät 12.

Die Haltevorrichtung 60 weist eine Geräteaufnahme 62 auf, über welche das mobile Endgerät an der Haltevorrichtung 60 fixiert ist. Die Haltevorrichtung 60 umfasst ferner eine Befestigungsvorrichtung 64, mittels welcher die Haltevorrichtung 60 zerstörungsfrei lösbar an der Saatgutförderleitung 30 befestigt ist. Die Geräteaufnahme 62 ist dazu eingerichtet, das mobile Endgerät 12 kraft- und/oder formschlüssig an der Haltevorrichtung 60 zu fixieren. Hierzu kann die Geräteaufnahme 62 beispielsweise ein oder mehrere Geräteklemmglieder umfassen. Die Befestigungsvorrichtung 64 der Haltevorrichtung 60 ist dazu eingerichtet, die Haltevorrichtung 60 kraft- und/oder formschlüssig an der Saatgutförderleitung 30 zu befestigen. Hierzu kann die Befestigungsvorrichtung 64 ein oder mehrere Leitungsklemmglieder umfassen.

Die Geräteaufnahme ist derart verstellbar, dass die Relativposition des in der Geräteaufnahme 62 fixierten mobilen Endgeräts 12 und der Saatgutförderleitung 30 veränderbar ist. Über die verstellbare Geräteaufnahme 62 kann die Kamera 14 des mobilen Endgeräts 12 relativ zur Saatgutförderleitung 30 positioniert und ausgerichtet werden. An der Geräteaufnahme 62 können auch andere mobile Endgeräte 12 mit einer anderen Größe und/oder einer anderen Form fixiert werden. Hierzu können die Geräteklemmglieder beispielsweise innerhalb eines Verstellbereichs verstellbar sein.

Die Saatgutförderleitung 30 weist eine Leitungsbewandung 32 auf, welche einen leitungsinternen Förderpfad 34 für das Saatgut umschließt. Die Leitungsbewandung 32 weist ein Aufnahmefenster 36 auf, über welches ein sich innerhalb der Saatgutförderleitung 30 befindender Aufnahmebereich 38 von außerhalb der Saatgutförderleitung 30 einsehbar ist. Auf diese Weise können über das Aufnahmefenster 36 mittels der Kamera 14 des mobilen Endgeräts 12 Bildaufnahmen A von dem Aufnahmebereich 38 erzeugt werden. Durch das Aufnahmefenster 36 können also mittels des mobilen Endgeräts 12 Bildaufnahmen A des Saatflusses gemacht werden.

Die Leitungsbewandung 32 ist im Bereich des Aufnahmefensters 36 durchsichtig ausgebildet. Alternativ kann das Aufnahmefenster 36 als Aufnahmeöffnung ausgebildet sein. Die Linse oder das Linsensystem der Kamera 14 ist im Nahbereich des Aufnahmefensters 30 angeordnet und auf den sich innerhalb der Saatgutförderleitung 30 befindenden Aufnahmebereich 38 ausgerichtet.

Die Leitungsbewandung 32 der Saatgutförderleitung 30 umfasst einen durch das Aufnahmefenster 36 einsehbaren innenliegenden Bewandungsflächenabschnitt 40. Der einsehbare innenliegende Bewandungsflächenabschnitt 40 weist eine von benachbart zu dem Bewandungsflächenabschnitt 40 angeordneten innenliegenden Bewandungsflächenabschnitten 42 abweichende Kontrastfarbe auf. Ferner kann der Bewandungsflächenabschnitt 40 strahlungsreflektierend ausgebildet sein. Der durch das Aufnahmefenster 36 einsehbare innenliegende Bewandungsflächenabschnitt 40 dient bei Bildaufnahmen A als Hintergrund. Der durch das Aufnahmefenster 36 einsehbare innenliegende Bewandungsflächenabschnitt 40 ist also farblich abgesetzt, sodass die Bildaufnahmequalität verbessert wird.

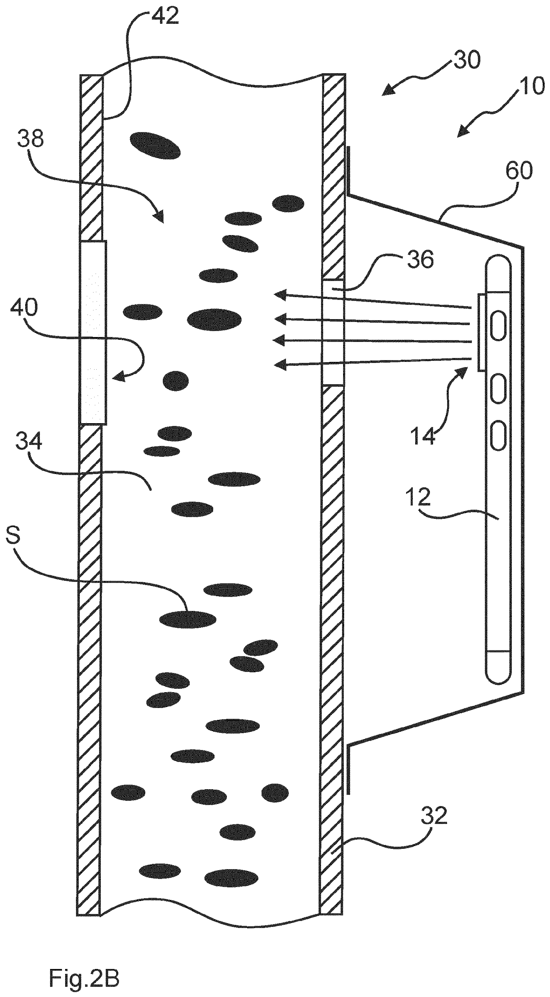

Die Fig. 2B zeigt ein Erfassungssystem 10, bei welchem die Haltevorrichtung 60 als Befestigungsbox ausgebildet ist. Das mobile Endgerät 12 ist innerhalb der Befestigungsbox befestigt. Die Befestigungsbox sorgt dafür, dass eine feste Verbindung mit der Saatgutförderleitung 30 und ein Mindestabstand zur Saatgutförderleitung entsteht. Aufgrund des vergrößerten Abstands zwischen der Kamera 14 und dem Aufnahmebereich 38 innerhalb der Saatgutförderleitung 30 können scharfe Bildaufnahmen A mit einem gewöhnlichen mobilen Endgerät 12 erzeugt werden.

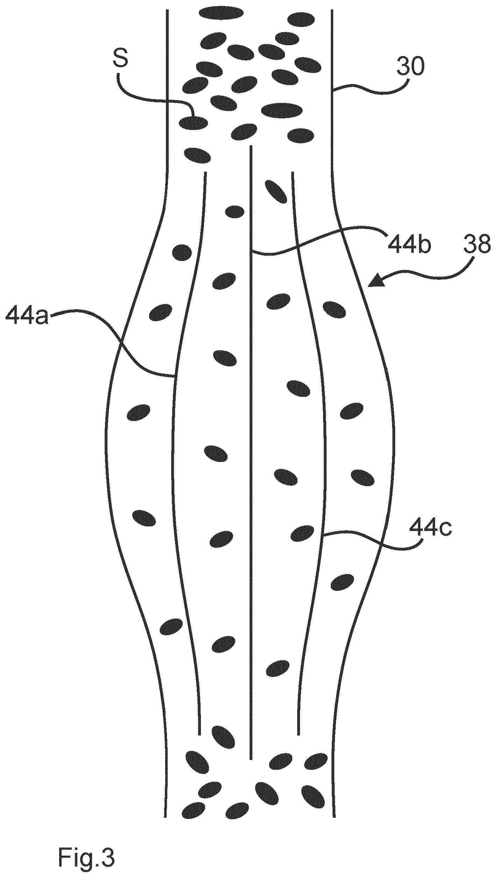

Die Fig. 3 zeigt eine Saatgutförderleitung 30, bei welcher innerhalb des Aufnahmebereichs 38 ein vergrößerter Leitungsquerschnitt gegenüber angrenzenden Leitungsabschnitten vorliegt. Innerhalb des Aufnahmebereichs 38 sind mehrere Leitelemente 44a-44c angeordnet, welche dazu dienen, die den Aufnahmebereich 38 passierenden Saatkörner S zu lenken und zu führen. Die Saatgutförderleitung 30 ist also konstruktiv so ausgelegt, dass sich der Saatgutstrom im Aufnahmebereich 38 auffächert, ohne dass sich der Saatfluss verändert. Bei mechanischen Sämaschinen ergibt sich also kein Rückstau an Saatgut. Bei pneumatischen Sämaschinen erfolgt kein wesentlicher Druckabfall. Durch den vergrößerten Leitungsquerschnitt im Aufnahmebereich 38 wird der Saatgutstrom aufgefächert. Die einzelnen Saatkörner S werden über eine breitere Fläche geführt, sodass die Schichtdicke dünner wird. Die Wahrscheinlichkeit von gegenseitigen Abdeckungen der Saatkörner S im Aufnahmebereich 38 wird somit erheblich verringert. Die Leitelemente 44a-44c sind Leitstege, welche an der Innenkontur der Saatgutförderleitung 30 angeordnet sind.

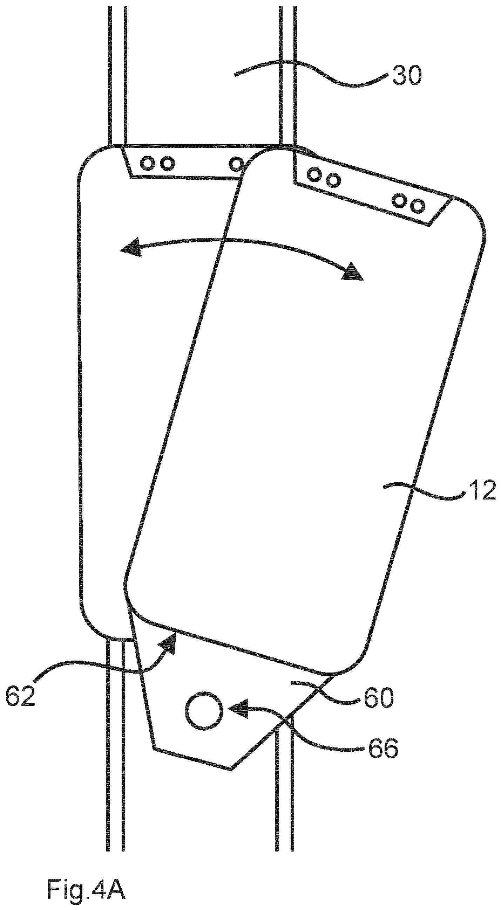

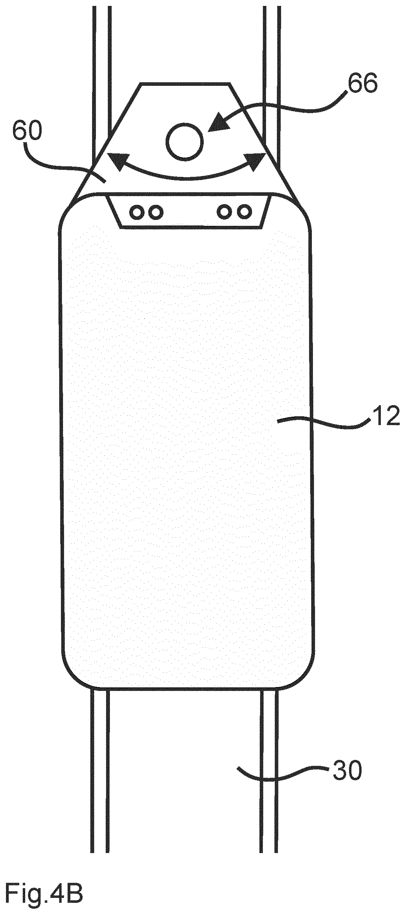

Die Fig. 4A zeigt eine Haltevorrichtung 60, über welche ein mobiles Endgerät 12 an einer Saatgutförderleitung 30 fixiert ist. Die Haltevorrichtung 60 umfasst einen Bewegungsmechanismus 66, mittels welchem die Geräteaufnahme 62 und somit das in der Geräteaufnahme 42 fixierte mobile Endgerät 12 zwischen einer Aufnahmeposition und einer Passivposition verschwenkbar ist. Der Schwenkmechanismus, mittels welchem das mobile Endgerät 12 verschwenkbar ist, kann -wie in der Fig. 4A- unterhalb der Geräteaufnahme 62 oder -wie in der Fig. 4B- oberhalb der Geräteaufnahme 62 angeordnet sein.

In der Aufnahmeposition ist das mobile Endgerät 12 derart ausgerichtet, dass mittels der Kamera 14 Bildaufnahmen A von einem Aufnahmebereich 38 innerhalb der Saatgutförderleitung 30 erzeugbar sind (vgl. Fig. 4B). In der Passivposition ist die Kameras 14 des mobilen Endgeräts 12 seitlich beabstandet von der Saatgutförderleitung 30 positioniert (vgl. Fig. 4A). Die Kamera 14 des mobilen Endgeräts 12 kann somit nur kurzzeitig während eines Aufnahmevorgangs oder während mehrerer Aufnahmevorgänge in der Aufnahmeposition an dem Aufnahmefenster 36 der Saatgutförderleitung 30 platziert sein. Danach kann das mobile Endgerät 12 in die Passivposition verschwenkt werden und ist somit nicht mehr der Verschmutzung ausgesetzt.

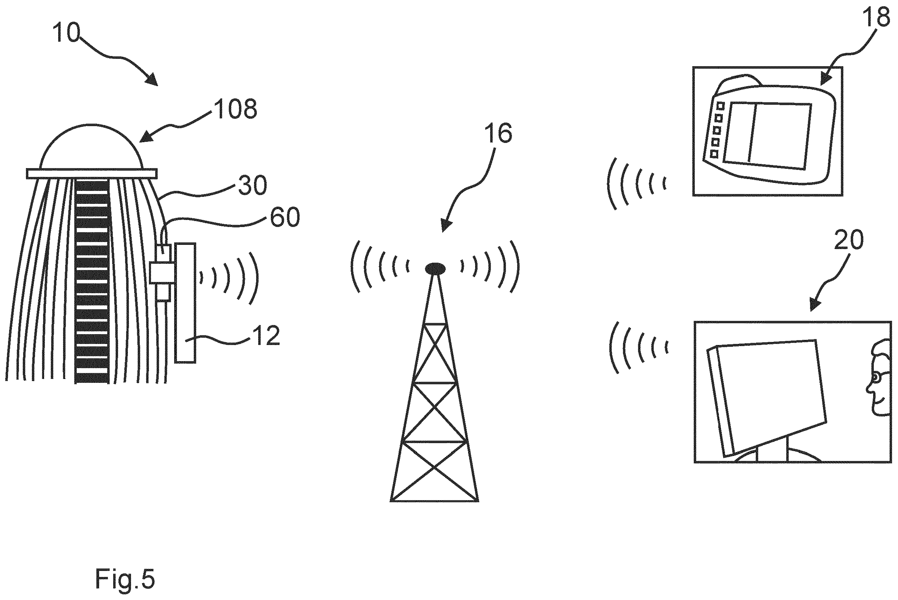

Die Fig. 5 zeigt ein Erfassungssystem 10 mit einer Verteileinrichtung 108, einem mobilen Endgerät 12, einer Mobilfunksendeanlage 16, einer Anzeige- und Bedieneinheit 18 und einer Leitstelle 20.

Die Verteileinrichtung 18 ist als Verteilerkopf ausgebildet und umfasst mehrere jeweils zu Saatgutablageeinrichtungen führende Saatgutförderleitungen 30. An einer Saatgutförderleitung 30 ist über eine Haltevorrichtung 60 das mobile Endgerät 12 fixiert. Mittels des mobilen Endgeräts 12 werden Bildaufnahmen A des Saatgutstroms innerhalb der Saatgutförderleitung 30 erzeugt. Das Erfassungssystem 10 umfasst ferner eine Auswerteeinrichtung, mittels welcher die erzeugten Bildaufnahmen A des Aufnahmebereichs 38 zum Erfassen der den Aufnahmebereich 38 passierenden Saatkörner S ausgewertet werden. Die Auswerteeinrichtung ist eine elektronische Datenverarbeitungseinrichtung und kann Bestandteil des mobilen Endgeräts 12, Bestandteil der Anzeige- und Bedieneinheit 18 oder Bestandteil eines Leitstellencomputers auf der Leitstelle 20 sein. Die Auswerteeinrichtung ist dazu eingerichtet, die Anzahl der den Aufnahmebereich 38 pro Sekunde passierenden Saatkörner S zu ermitteln.

Wenn die Auswerteeinrichtung Bestandteil der Anzeige- und Bedieneinheit 18 oder des Leitstellencomputers der Leitstelle 20 ist, können die Bildaufnahmen A über Funk, insbesondere über Mobilfunk, auch unter Nutzung des Internets, von dem mobilen Endgerät 12 an die Anzeige- und Bedieneinheit 18 bzw. den Leitstellencomputer übertragen werden. Hierzu kann das Erfassungssystem eine Mobilfunksendeanlage 16 umfassen, welche als Basisstation und somit als Knotenpunkt in einem Mobilfunknetz fungiert.

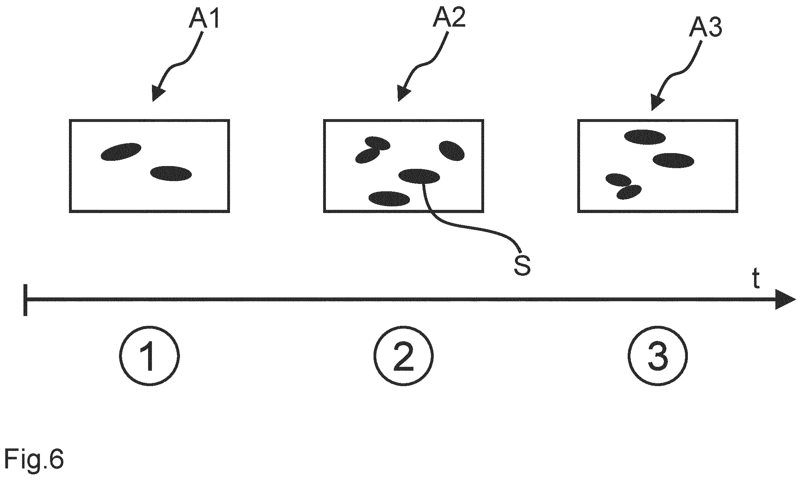

Die Fig. 6 zeigt drei mittels eines mobilen Endgeräts 12 erzeugte Bildaufnahmen A1-A3. Die Bildaufnahmen A1-A3 wurden zu unterschiedlichen Zeitpunkten erzeugt. Die Auswerteeinrichtung erfasst die Anzahl der auf den Bildaufnahmen A1-A3 abgebildeten Körner und berechnet unter Berücksichtigung des zeitlichen Abstands der Bildaufnahmen A1-A3 die Anzahl der den Aufnahmebereich 38 der Saatgutförderleitung 30 pro Sekunde passierenden Saatkörner S.

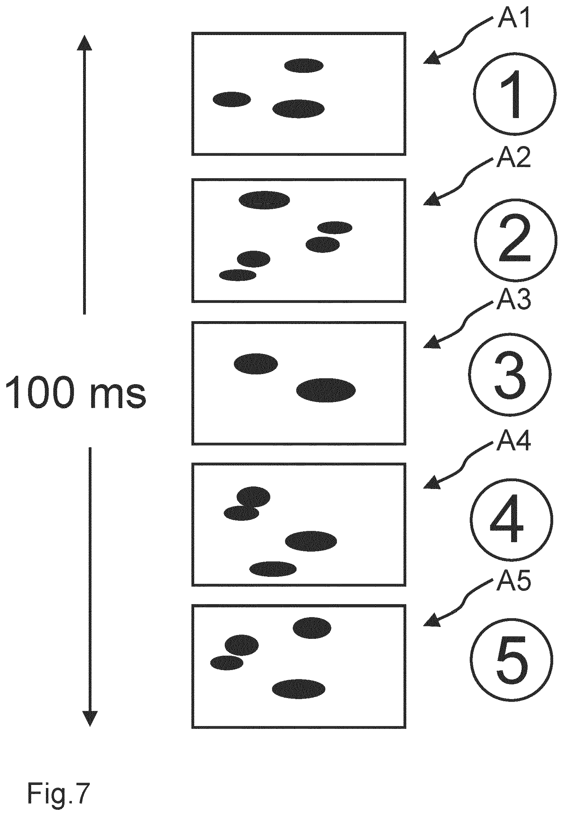

Die Fig. 7 zeigt weitere mittels einer Kamera 14 eines mobilen Endgeräts 12 erzeugte Bildaufnahmen A1-A5, welche zu fünf unterschiedlichen Zeitpunkten innerhalb eines Zeitintervalls von 100ms aufgenommen wurden. Die Auswerteeinrichtung ermittelt auf Grundlage einer Bildauswertung und der zeitlichen Beabstandung der Bildaufnahmen A1-A5 die Anzahl der den Aufnahmebereich 38 innerhalb der Saatgutförderleitung 30 pro Sekunde passierenden Saatkörner S.

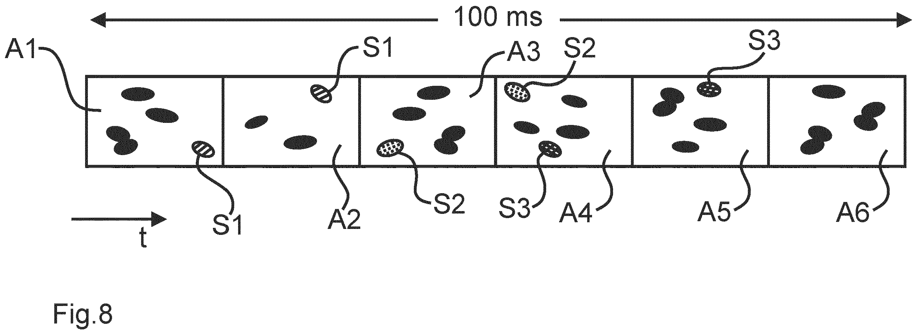

Die Fig. 8 zeigt eine Serienaufnahme mit insgesamt sechs kurzzeitig hintereinander gemachten Bildaufnahmen A1-A6. Aus der Zeitspanne der Aufnahmeserie und den auf den Bildaufnahmen A1-A6 gezählten Körnern ermittelt die Auswerteeinrichtung des Erfassungssystems 10 den Saatgutstrom in Körnern pro Sekunde. Abhängig von der Bewegungsgeschwindigkeit der Saatkörner und der Zeitfolge bei der Serienaufnahme können einzelne Saatkörner S1-S3 doppelt erfasst werden. Im Rahmen der Bildauswertung erkennt die Auswerteeinrichtung doppelt abgebildete Saatkörner S1-S3, beispielsweise anhand der Kornform, der Korngröße und/oder der Kornoberfläche. Über die doppelt abgebildeten Saatkörner S1-S3 kann die Auswerteeinrichtung die Bewegungsgeschwindigkeit der Saatkörner direkt berechnen. Die Berechnung des Saatgutstroms kann somit mit einer höheren Präzision erfolgen. Die Auswerteeinrichtung kann auch einzelne Saatkörner in den Bildaufnahmen A1-A6 identifizieren und verfolgen. Dabei steigt die Wahrscheinlichkeit, dass jedes Saatkorn einmal einzeln abgebildet ist, mit zunehmender Größe des Bildausschnitts an. Bei ausreichend großem Bildausschnitt kann die Auswerteeinrichtung auf diese Weise auch die wahre Anzahl an Saatkörnern ermitteln.

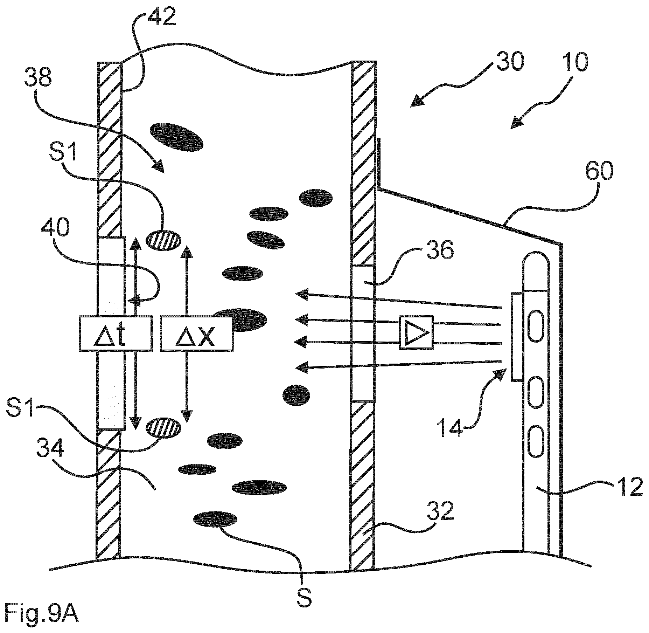

Wie in der Fig. 9A dargestellt, kann die Auswerteeinrichtung auch dazu eingerichtet sein, die sich aufgrund einer Zeitdifferenz Δt ergebende Wegdifferenz Δx zwischen erfassten Positionen eines Saatkorns S bei der Berechnung des Saatgutstroms zu berücksichtigen. Über die Zeitdifferenz Δt und die Wegdifferenz Δx lässt sich die Bewegungsgeschwindigkeit des Saatguts vergleichsweise präzise bestimmen. Die Zeitdifferenz Δt und die Wegdifferenz Δx lassen sich beispielsweise durch die Auswertung von Serienaufnahmen oder Videoaufnahmen ermitteln.

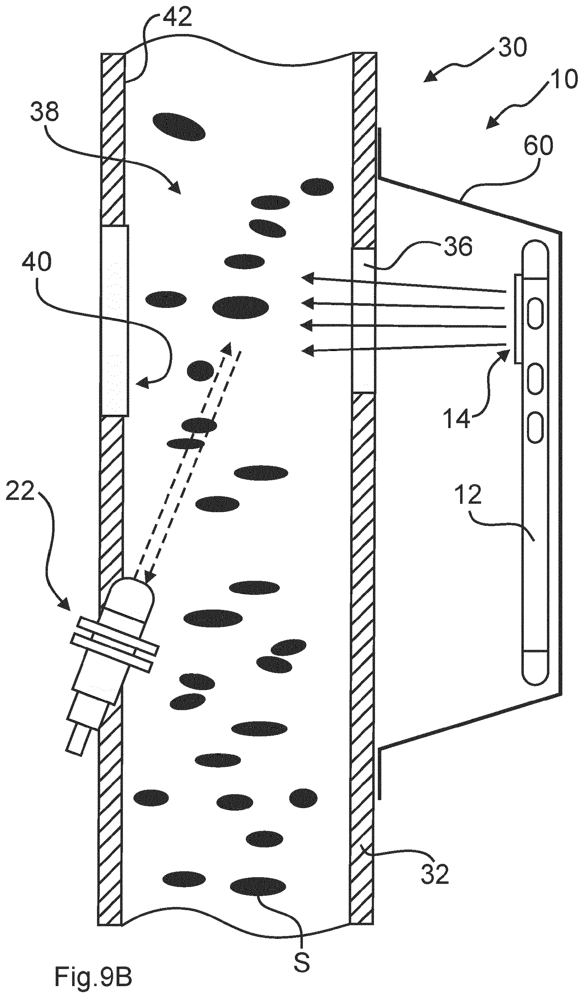

Die Fig. 9B zeigt ein Erfassungssystem 10 mit einem Geschwindigkeitsmesssensor 22. Mittels des Geschwindigkeitsmesssensors 22 können die Korngeschwindigkeiten der den Aufnahmebereich 38 passierenden Saatkörner S gemessen werden. Die Auswerteeinrichtung wertet die Bildaufnahmen der Kamera 14 des mobilen Endgeräts 12 zum Erfassen der Menge an während einer Zeiteinheit den Aufnahmebereich 38 passierenden Saatkörnern S unter Berücksichtigung der mittels des Korngeschwindigkeitsmesssensors 22 gemessenen Korngeschwindigkeiten aus. Die Auswerteeinrichtung und der Geschwindigkeitsmesssensor 22 kann datenübertragend miteinander verbunden sein. Mit dem mobilen Endgerät 12 kann beispielsweise eine Einzelaufnahme von dem dosierten Saatstrom gemacht werden. Gleichzeitig wird mit dem Geschwindigkeitsmesssensor 22 die Geschwindigkeit des Saatgutstroms gemessen. Der Geschwindigkeitsmesssensor 22 kann beispielsweise ein Radarsensor sein, der nach dem Doppler-Prinzip arbeitet. Beide Datenpakete, also die Bilddaten und die Geschwindigkeitsdaten, werden durch die Auswerteeinrichtung miteinander verknüpft, sodass sich die Anzahl der Körner pro Sekunde präzise berechnen lässt. Die Auswerteeinrichtung kann Bestandteil des mobilen Endgeräts 12 sein. Alternativ kann die Auswerteeinrichtung aber auch eine endgeräteexterne elektronische Datenverarbeitungseinrichtung sein.

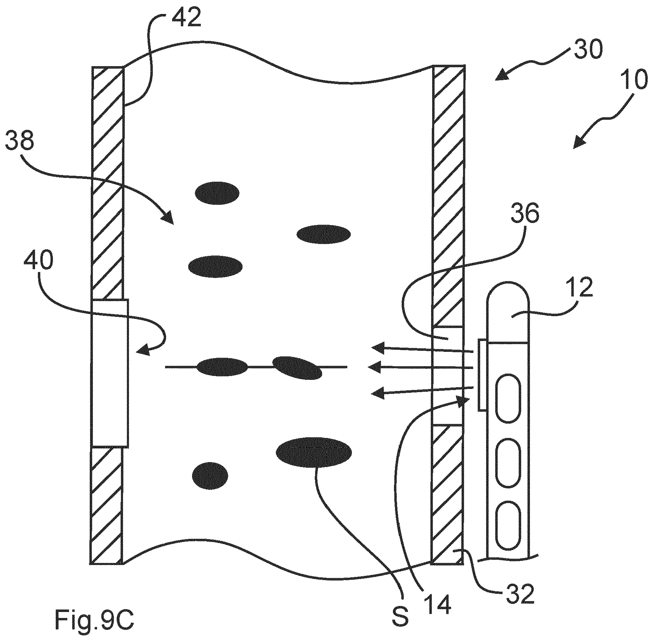

Die Fig. 9C zeigt, dass sich Saatkörner S innerhalb des Aufnahmebereichs abdecken können. Die Auswerteeinrichtung kann dazu eingerichtet sein, bei der Saatflussermittlung die gegenseitige Abdeckung von Saatkörnern S zu berücksichtigen. Die Berücksichtigung der Saatkornabdeckung kann nach statistischen Gesichtspunkten erfolgen, beispielsweise berücksichtigt die Auswerteeinrichtung, dass die Abdeckungsrate mit Zunahme des Saatgutflusses ansteigt.

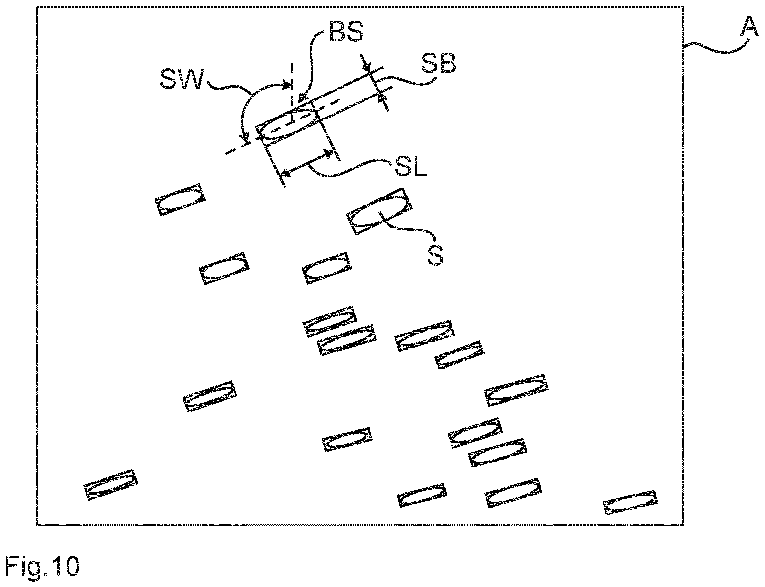

Die Fig. 10 zeigt eine Bildaufnahme A, welche eine durch Bewegungsunschärfe entstehende Bewegungsspur BS von Saatkörnern S zeigt. Die Auswerteeinrichtung kann dazu eingerichtet sein, in einer oder mehreren Bildaufnahmen A eine durch Bewegungsunschärfe entstehende Bewegungsspur BS eines oder mehrerer Saatkörner zu erfassen und die Bewegungsspur BS zum Erfassen der Bewegungsgeschwindigkeit und/oder der Bewegungsrichtung der den Aufnahmebereich 38 passierenden Saatkörner S auszuwerten. Hierzu kann die Auswerteeinrichtung die Spurlänge SL, die Spurbreite SB und/oder den Spurwinkel SW der Bewegungsspur BS untersuchen.

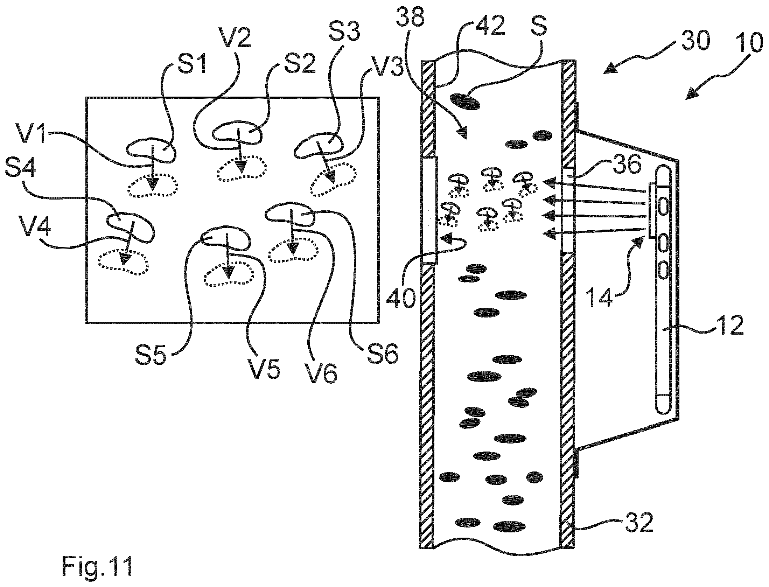

Wie in der Fig. 11 dargestellt, können mittels Bildauswertung auch Geschwindigkeitsvektoren V1-V6 von Saatkörnern S1-S6 ermittelt werden. Über die Geschwindigkeitsvektoren V1-V6 kann die Anzahl der den Aufnahmebereich 38 passierenden Saatkörner pro Sekunde äußerst präzise ermittelt werden.

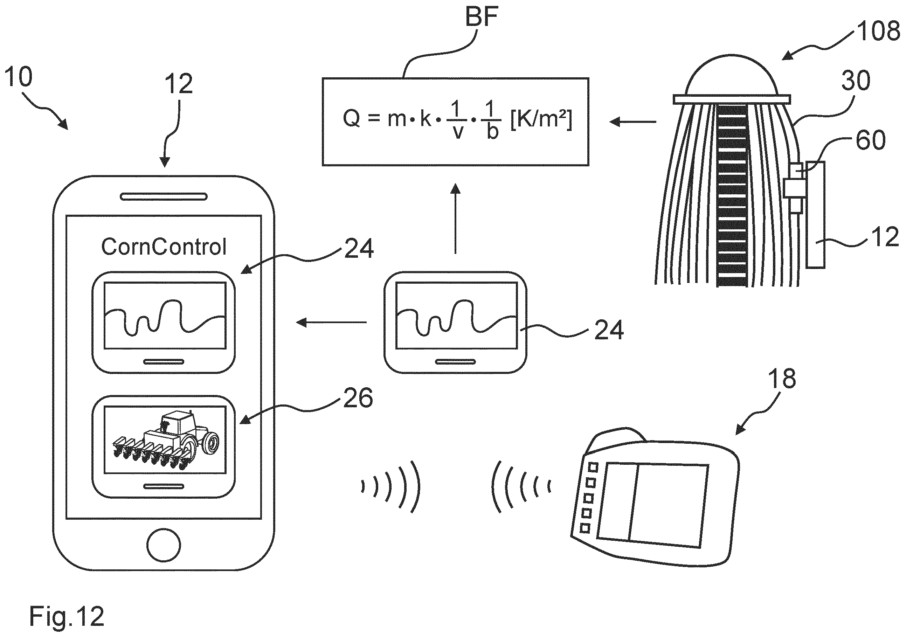

Die Fig. 12 zeigt ein Erfassungssystem 10, mittels welchem eine Dosiersollmenge Q ermittelt wird. Über eine Kornerfassungsanwendung 24, welche auf einem an einer Saatgutförderleitung 30 positionierten mobilen Endgerät installiert ist, wird zunächst ein Messwert m ermittelt, welcher den Saatgutstrom innerhalb der Saatgutförderleitung 30 in Körnern pro Sekunde wiedergibt. Unter Nutzung einer Berechnungsformel BF wird der Messwert m dann mit der Anzahl k an Saatgutförderleitungen multipliziert und durch die Fahrgeschwindigkeit v und die Arbeitsbreite b der Sämaschine 200 geteilt.

Auf dem mobilen Endgerät 12 kann eine Steuerungsanwendung 26 installiert sein, welche mit einer Anzeige- und Bedieneinheit 18 kommunizieren kann.

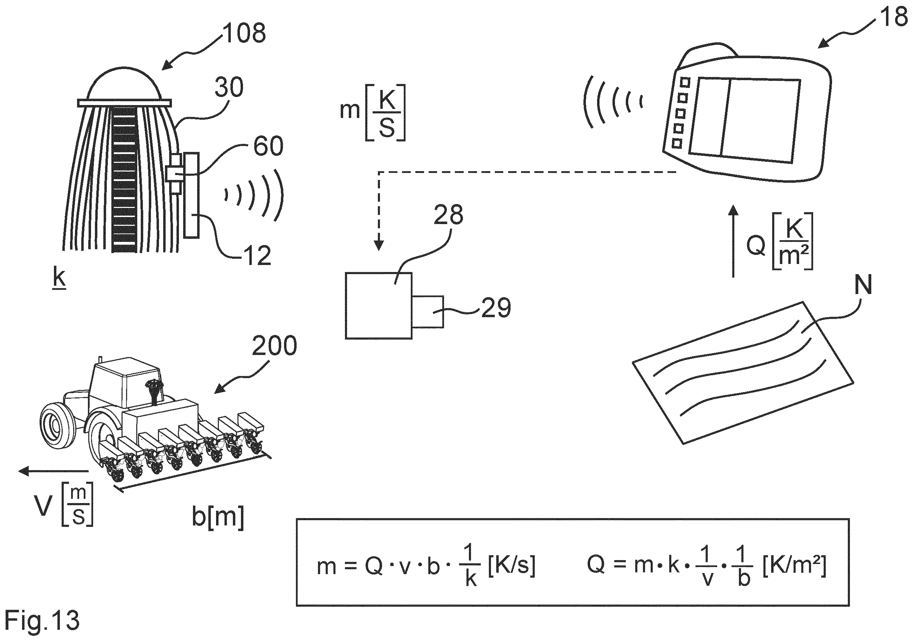

Die Fig. 13 zeigt, dass die Anzeige- und Bedieneinheit 18 dann eine Dosiervorrichtung 28 mit einem Dosierantrieb 29 ansteuern kann. Auf Grundlage der Berechnungsformel BF kann für die landwirtschaftliche Nutzfläche N ein Sollsaatgutstrom in Körnern pro Sekunde ermittelt werden. Der Dosierantrieb 29 der Dosiervorrichtung 28 wird also derart eingeregelt, dass sich innerhalb der Saatgutförderleitung 30 der Sollsaatgutstrom einstellt. Der Dosierantrieb 29 kann ein elektrischer, pneumatischer, mechanischer oder hydraulischer Antrieb sein. Demnach kann die Dosiereinrichtung 28 elektrisch, pneumatisch, mechanisch oder hydraulisch angetrieben sein.

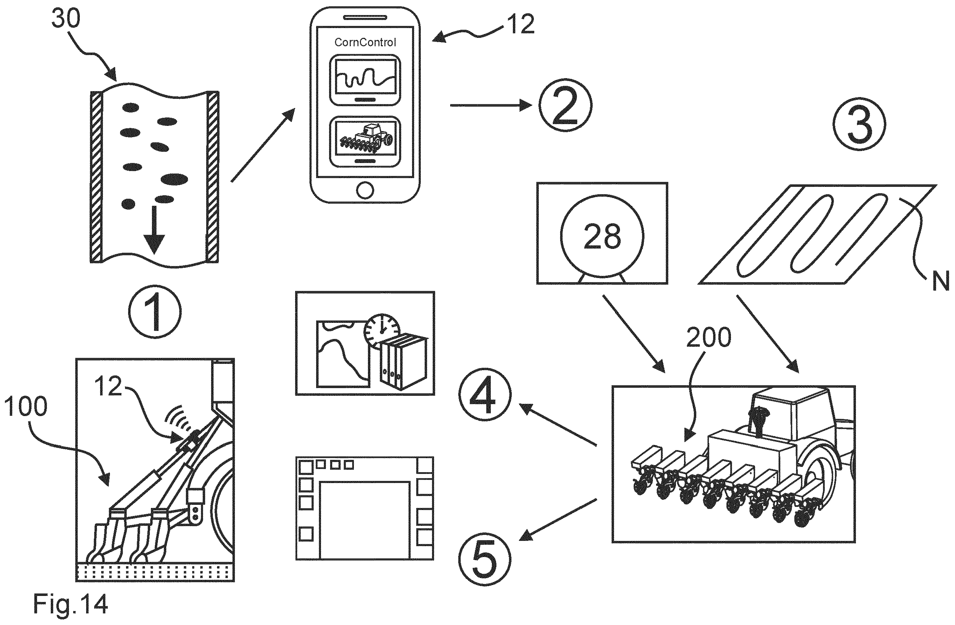

Die Fig. 14 zeigt den Funktionsumfang eines Erfassungssystems 10. Das Erfassungssystem 10 kann als Körnerzähler eingesetzt werden, vgl. Ziffer 1. Ferner kann über das Erfassungssystem 10 die Ausbringmenge an Saatgut gesteuert bzw. eingestellt werden, vgl. Ziffer 2. Die durch das Erfassungssystem 10 ermittelten Saatgutdaten können während des Ausführens von Parallelfahrten, bei einer Fahrgassenschaltung und/oder bei einer Teilbreitenschaltung berücksichtigt werden, vgl. Ziffer 3. Außerdem kann über den ermittelten Saatgutstrom eine erforderliche Nachfüllmenge und/oder eine sich ergebende Restmenge während eines Ausbringvorgangs berechnet werden, vgl. Ziffer 4. Darüber hinaus können Arbeitsdaten, Klimadaten, Geländeeigenschaften dokumentiert werden. Hierbei kann auch eine georeferenzierte Dokumentation der Ausbringmenge erfolgen, vgl. Ziffer 5.

### Bezugszeichenliste

- 10: Erfassungssystem
- 12: mobiles Endgerät
- 14: Kamera
- 16: Mobilfunksendeanlage
- 18: Anzeige- und/oder Bedieneinheit
- 20: Leitstelle
- 22: Geschwindigkeitsmesssensor
- 24: Kornerfassungsanwendung
- 26: Steuerungsanwendung
- 28: Dosiervorrichtung
- 29: Dosierantrieb

- 30, 30a, 30b: Saatgutförderleitung
- 32: Leitungsbewandung
- 34: Förderpfad
- 36: Aufnahmefenster
- 38: Aufnahmebereich
- 40: Bewandungsflächenabschnitt
- 42: Bewandungsflächenabschnitt
- 44a-44c: Leitelemente

- 60: Haltevorrichtung
- 62: Geräteaufnahme
- 64: Befestigungsvorrichtung
- 66: Bewegungsmechanismus

- 100: Säaggregat
- 102a, 102b: Säschare
- 104: Vorratsbehälter
- 106: Schneidscheibe
- 108: Verteileinrichtung

- 200: Sämaschine

- A, A1-A6: Bildaufnahmen
- b: Arbeitsbreite
- B: Boden
- BS: Bewegungsspur
- BF: Berechnungsformel
- F: Fahrtrichtung
- k: Anzahl Saatgutförderleitungen
- m: Messwert
- N: Nutzfläche
- S, S1-S6: Saatkörner
- SL: Spurlänge
- SB: Spurbreite
- SW: Spurwinkel
- t: Zeit
- v: Geschwindigkeit
- V1-V6: Geschwindigkeitsvektoren
- Q: Dosiersollmenge
- Δt: Zeitdifferenz
- Δx: Wegdifferenz

## Patentansprüche

1. Erfassungssystem (10) für Saatkörner (S, S1-S6), mit
- einer Saatgutförderleitung (30, 30a, 30b);
- einem mobilen Endgerät (12), welches eine Kamera (14) zum Erzeugen von Bildaufnahmen (A, A1-A6) eines sich innerhalb der Saatgutförderleitung (30, 30a, 30b) befindenden Aufnahmebereichs (38) der Saatgutförderleitung (30, 30a, 30b) aufweist; und
- einer Haltevorrichtung (60) zum zerstörungsfrei lösbaren Befestigen des mobilen Endgeräts (12) an der Saatgutförderleitung (30, 30a, 30b) und/oder einem Säschar einer Sämaschine (200);
- eine Auswerteeinrichtung, welche dazu eingerichtet ist, eine oder mehrere durch die Kamera (14) des mobilen Endgeräts (12) erzeugte Bildaufnahmen (A, A1-A6) des Aufnahmebereichs (38) zum Erfassen der den Aufnahmebereich (38) passierenden Saatkörner (S, S1-S6) auszuwerten, **gekennzeichnet durch** einen Geschwindigkeitsmesssensor (22), mittels welchem Korngeschwindigkeiten der den Aufnahmebereich (38) passierenden Saatkörner (S, S1-S6) messbar sind, wobei die Auswerteeinrichtung dazu eingerichtet ist, die eine oder die mehreren durch die Kamera (14) des mobilen Endgeräts (12) erzeugten Bildaufnahmen (A, A1-A6) des Aufnahmebereichs (38) zum Erfassen der Menge an während einer Zeiteinheit den Aufnahmebereich (38) passierenden Saatkörnern (S, S1-S6) unter Berücksichtigung der mittels des Geschwindigkeitsmesssensors (22) gemessenen Korngeschwindigkeiten auszuwerten.

2. Erfassungssystem (10) nach Anspruch 1,
**dadurch gekennzeichnet, dass** auf dem mobilen Endgerät (12) eine Kornerfassungsanwendung (24) zum Erzeugen und/oder Verwalten von Bildaufnahmen (A, A1-A6) des Aufnahmebereichs (38) installiert ist.

3. Erfassungssystem (10) nach Anspruch 1,
**dadurch gekennzeichnet, dass** die Auswerteeinrichtung dazu eingerichtet ist, beim Erfassen der den Aufnahmebereich (38) passierenden Saatkörner (S, S1-S6) einen oder mehrere aktuelle Einstellparameter der Sämaschine (200) zu berücksichtigen.

4. Erfassungssystem (10) nach Anspruch 1 oder 3,
**dadurch gekennzeichnet, dass** die Auswerteeinrichtung dazu eingerichtet ist, in der einen oder den mehreren Bildaufnahmen (A, A1-A6) eine durch Bewegungsunschärfe entstehende Bewegungsspur (BS) zumindest eines Saatkorns zu erfassen und die Bewegungsspur (BS) des Saatkorns zum Erfassen der Bewegungsgeschwindigkeit und/oder der Bewegungsrichtung des den Aufnahmebereich (38) passierenden Saatkorns auszuwerten.

5. Erfassungssystem (10) nach Anspruch 1,
**dadurch gekennzeichnet, dass** die Auswerteeinrichtung dazu eingerichtet ist, Bilddaten des mobilen Endgeräts (12) zu einer oder mehreren Einzelaufnahmen von dem dosierten Saatgutstrom und Geschwindigkeitsdaten des Geschwindigkeitsmesssensors (22) zu der Geschwindigkeit des Saatgutstroms miteinander zu verknüpfen, insbesondere um die Anzahl der Körner (S, S1-S6) pro Sekunde zu berechnen.

6. Erfassungssystem (10) nach einem der Ansprüche 1 oder 5,
**dadurch gekennzeichnet, dass** der Geschwindigkeitsmesssensor (22) ein Radarsensor ist, der nach dem Doppler-Prinzip arbeitet.

7. Verfahren zum Erfassen von Saatkörnern (S, S1-S6) in einer Saatgutförderleitung (30, 30a, 30b) einer landwirtschaftlichen Sämaschine (200) mittels eines Erfassungssystems (10), insbesondere mittels eines Erfassungssystems (10) nach einem der vorstehenden Ansprüche, mit den Schritten:
- zerstörungsfrei lösbares Fixieren eines mobilen Endgerät (12) in einer Geräteaufnahme (62) einer Haltevorrichtung (60) des Erfassungssystems (10);
- Erzeugen von einer oder mehreren Bildaufnahmen (A, A1-A6) von einem sich innerhalb der Saatgutförderleitung (30, 30a, 30b) befindenden Aufnahmebereich (38) der Saatgutförderleitung (30, 30a, 30b) mittels einer Kamera (14) des mobilen Endgeräts (12) des Erfassungssystems (10), währenddessen das mobile Endgerät (12) in der Geräteaufnahme (62) der Haltevorrichtung (60) fixiert ist, **gekennzeichnet durch** den Schritt:
- Messen der Korngeschwindigkeiten der den Aufnahmebereich (38) passierenden Saatkörner (S, S1-S6) mittels eines Geschwindigkeitsmesssensors (22),
wobei die eine oder die mehreren durch die Kamera (14) des mobilen Endgeräts (12) erzeugten Bildaufnahmen (A, A1-A6) des Aufnahmebereichs (38) zum Erfassen der Menge an während einer Zeiteinheit den Aufnahmebereich (38) passierenden Saatkörnern (S, S1-S6) unter Berücksichtigung der mittels des Geschwindigkeitsmesssensor (22) gemessenen Korngeschwindigkeiten ausgewertet werden.

8. Verfahren nach Anspruch 7,
**gekennzeichnet durch** den Schritt
- Auswerten der einen oder der mehreren Bildaufnahmen (A, A1-A6), insbesondere mittels einer auf dem mobilen Endgerät (12) installierten Kornerfassungsanwendung (24), zum Erfassen von den Aufnahmebereich (38) der Saatgutförderleitung (30, 30a, 30b) passierenden Saatkörnern (S, S1-S6).

9. Verfahren nach Anspruch 7 oder 8,
**dadurch gekennzeichnet, dass** beim Auswerten der einen oder der mehreren Bildaufnahmen (A, A1-A6) eine durch Bewegungsunschärfe entstehende Bewegungsspur (BS) zumindest eines Saatkorns erfasst wird und die Bewegungsspur (BS) des Saatkorns zum Erfassen der Bewegungsgeschwindigkeit und/oder der Bewegungsrichtung des den Aufnahmebereich (38) passierenden Saatkorns ausgewertet wird.

10. Verfahren nach einem der Ansprüche 7 bis 9,
**dadurch gekennzeichnet, dass** eine auf dem mobilen Endgerät (12) installierte Kornerfassungsanwendung (24) die Kamera (14) des mobilen Endgeräts (12) dazu veranlasst, die eine oder die mehreren Bildaufnahmen (A, A1-A6) zu erzeugen.

11. Verfahren nach einem der Ansprüche 8 bis 11,
**dadurch gekennzeichnet, dass** eine auf dem mobilen Endgerät (12) installierte Kornerfassungsanwendung (24) die Kamera (14) des mobilen Endgeräts (12) dazu veranlasst, beim Erzeugen der einen oder der mehreren Bildaufnahmen (A, A1-A6) eine oder mehrere Einzelaufnahmen, eine oder mehrere Serienaufnahmen und/oder eine oder mehrere Videoaufnahmen des Aufnahmebereichs (38) zu machen.

12. Verfahren nach einem der Ansprüche 8 bis 11,
**dadurch gekennzeichnet, dass** beim Auswerten der einen oder der mehreren Bildaufnahmen (A, A1-A6) aus der Zeitspanne einer Aufnahmeserie und den auf Einzelbildern gezählten Körnern der Saatgutstrom in Körner (S, S1-S6) pro Sekunde berechnet wird.

13. Verfahren nach einem der Ansprüche 7 bis 12,
**dadurch gekennzeichnet, dass** beim Auswerten der einen oder der mehreren Bildaufnahmen (A, A1-A6) künstliche Intelligenz zum Ausgleichen von Messfehlern einsetzt wird.

14. Verfahren nach einem der Ansprüche 8 bis 13,
**dadurch gekennzeichnet, dass** das Auswerten der einen oder der mehreren Bildaufnahmen (A, A1-A6) auf Grundlage von hinterlegten Eigenschaften der Saatgutart, welche sich dem geförderten Saatgut zuordnen lassen, aufwertet wird.

15. Verfahren nach einem der Ansprüche 8 bis 14,
**dadurch gekennzeichnet, dass** beim Auswerten der einen oder der mehreren Bildaufnahmen (A, A1-A6) Messfehler durch erstellte Gesetzmäßigkeiten ausgeglichen werden.

16. Verfahren nach einem der Ansprüche 8 bis 10,
**dadurch gekennzeichnet, dass** eine auf dem mobilen Endgerät (12) installierte Kornerfassungsanwendung (24) eine Beleuchtungs- und/oder Blitzlichteinrichtung des mobilen Endgeräts (12) beim Erzeugen der einen oder der mehreren Bildaufnahmen (A, A1-A6) zum Ausleuchten des Aufnahmebereichs (38) aktiviert.

17. Verfahren nach einem der Ansprüche 7 bis 16,
**dadurch gekennzeichnet, dass** das Erzeugen der einen oder der mehreren Bildaufnahmen (A, A1-A6) mittels der Kamera (14) des mobilen Endgeräts (12) durch ein Aufnahmefenster (36) einer einen leitungsinternen Förderpfad (34) für das Saatgut umschließenden Leitungsbewandung (32) der Saatgutförderleitung (30, 30a, 30b) erfolgt, über welches der Aufnahmebereich (38) von außerhalb der Saatgutförderleitung (30, 30a, 30b) einsehbar ist.

18. Verfahren zum Einstellen einer Dosiervorrichtung (28) einer landwirtschaftlichen Sämaschine (200), mit den Schritten:
- Erfassen von Saatkörnern (S, S1-S6) in einer Saatgutförderleitung (30, 30a, 30b) einer landwirtschaftlichen Sämaschine (200);
- Berechnen von Einstellwerten für die Dosiervorrichtung (28) unter Berücksichtigung eines Saatflusses, welcher auf Grundlage der in der Saatgutförderleitung (30, 30a, 30b) erfassten Saatkörner (S, S1-S6) ermittelt wird, und
- Einstellen der berechneten Einstellwerte an der Dosiervorrichtung (28);
**dadurch gekennzeichnet, dass** das Erfassen der Saatkörner (S, S1-S6) nach einem der Ansprüche 7 bis 17 erfolgt.

## Claims

1. Detection system (10) for seed grains (S, S1-S6), comprising
- a seed conveyor line (30, 30a, 30b);
- a mobile terminal (12) which has a camera (14) for generating image captures (A, A1-A6) of a capture region (38) of the seed conveyor line (30, 30a, 30b) located within the seed conveyor line (30, 30a, 30b); and
- a holding apparatus (60) for non-destructively releasably fastening the mobile terminal (12) to the seed conveyor line (30, 30a, 30b) and/or a coulter of a seed drill (200);
- an evaluation device which is configured to evaluate one or more image captures (A, A1-A6), generated by the camera (14) of the mobile terminal (12), of the capture region (38) in order to detect the seed grains (S, S1-S6) passing through the capture region (38), **characterized by** a speed measuring sensor (22), by means of which grain speeds of the seed grains (S, S1-S6) passing through the capture region (38) can be measured, the evaluation device being configured to evaluate the one or more image captures (A, A1-A6), generated by the camera (14) of the mobile terminal (12), of the capture region (38) in order to detect the quantity of seed grains (S, S1-S6) passing through the capture region (38) during a unit of time, taking into account the grain speeds measured by means of the speed measuring sensor (22).

2. Detection system (10) according to claim 1,
**characterized in that** a grain detection application (24) for generating and/or managing image captures (A, A1-A6) of the capture region (38) is installed on the mobile terminal (12).

3. Detection system (10) according to claim 1,
**characterized in that** the evaluation device is configured to take one or more current setting parameters of the seed drill (200) into account when detecting the seed grains (S, S1-S6) passing through the capture region (38).

4. Detection system (10) according to claim 1 or 3,
**characterized in that** the evaluation device is configured to detect, in the one or more image captures (A, A1-A6), a movement track (BS), resulting from motion blur, of at least one seed grain and to evaluate the movement track (BS) of the seed grain in order to detect the movement speed and/or the movement direction of the seed grain passing through the capture region (38).

5. Detection system (10) according to claim 1,
**characterized in that** the evaluation device is configured to link image data from the mobile terminal (12) to one or more individual image captures of the metered seed flow, and speed data from the speed measuring sensor (22) to the speed of the seed flow, in particular to calculate the number of grains (S, S1-S6) per second.

6. Detection system (10) according to any of claims 1 or 5,
**characterized in that** the speed measuring sensor (22) is a radar sensor that operates according to the Doppler principle.

7. Method for detecting seed grains (S, S1-S6) in a seed conveyor line (30, 30a, 30b) of an agricultural seed drill (200) by means of a detection system (10), in particular by means of a detection system (10) according to any of the preceding claims, comprising the steps of:
- non-destructively releasably fixing a mobile terminal (12) in a device receptacle (62) of a holding apparatus (60) of the detection system (10);
- generating one or more image captures (A, A1-A6) of a capture region (38) of the seed conveyor line (30, 30a, 30b) located within the seed conveyor line (30, 30a, 30b) by means of a camera (14) of the mobile terminal (12) of the detection system (10), at the same time the mobile terminal (12) is fixed in the device holder (62) of the holding apparatus (60),
**characterized by** the step of:
- measuring the grain speeds of the seed grains (S, S1-S6) passing through the capture region (38) by means of a speed measuring sensor (22),
the one or more image captures (A, A1-A6), generated by the camera (14) of the mobile terminal (12), of the capture region (38) being evaluated in order to detect the quantity of seed grains (S, S1-S6) passing through the capture region (38) during a unit of time, taking into account the grain speeds measured by means of the speed measuring sensor (22).

8. Method according to claim 7,
**characterized by** the step of
- evaluating the one or more image captures (A, A1-A6), in particular by means of a grain detection application (24) installed on the mobile terminal (12), in order to detect seed grains (S, S1-S6) passing through the capture region (38) of the seed conveyor line (30, 30a, 30b).

9. Method according to claim 7 or 8,
**characterized in that,** when evaluating the one or more image captures (A, A1-A6), a movement track (BS), resulting from motion blur, of at least one seed grain is detected and the movement track (BS) of the seed grain is evaluated in order to detect the movement speed and/or the movement direction of the seed grain passing through the capture region (38).

10. Method according to any of claims 7 to 9,
**characterized in that** a grain detection application (24) installed on the mobile terminal (12) causes the camera (14) of the mobile terminal (12) to generate the one or more image captures (A, A1-A6).

11. Method according to any of claims 8 to 11,
**characterized in that** a grain detection application (24) installed on the mobile terminal (12) causes the camera (14) of the mobile terminal (12) to take one or more individual captures, one or more series captures and/or one or more video captures of the capture region (38) when generating the one or more image captures (A, A1-A6).

12. Method according to any of claims 8 to 11,
**characterized in that,** when evaluating the one or more image captures (A, A1-A6), the seed flow in grains (S, S1-S6) per second is calculated from the time span of a series of captures and the grains counted in individual images.

13. Method according to any of claims 7 to 12,
**characterized in that,** when evaluating the one or more image captures (A, A1-A6), artificial intelligence is used to compensate for measurement errors.

14. Method according to any of claims 8 to 13,
**characterized in that** the evaluation of the one or more image captures (A, A1-A6) is analyzed on the basis of stored properties of the seed type which are assigned to the conveyed seed.

15. Method according to any of claims 8 to 14,
**characterized in that,** when evaluating the one or more image captures (A, A1-A6), measurement errors are compensated for by established regularities.

16. Method according to any of claims 8 to 10,
**characterized in that** a grain detection application (24) installed on the mobile terminal (12) activates a lighting and/or flashing-light device of the mobile terminal (12) when generating the one or more image captures (A, A1-A6), in order to illuminate the capture region (38).

17. Method according to any of claims 7 to 16,
**characterized in that** the generation of the one or more image captures (A, A1-A6) by means of the camera (14) of the mobile terminal (12) takes place through a capture window (36) of a line wall (32), enclosing an in-line conveying path (34) for the seed, of the seed conveyor line (30, 30a, 30b), via which capture window the capture region (38) can be viewed from outside the seed conveyor line (30, 30a, 30b).

18. Method for setting a metering apparatus (28) of an agricultural seed drill (200), comprising the steps of:
- detecting seed grains (S, S1-S6) in a seed conveyor line (30, 30a, 30b) of an agricultural seed drill (200);
- calculating setting values for the metering apparatus (28), taking into account a seed flow which is determined on the basis of the seed grains (S, S1-S6) detected in the seed conveyor line (30, 30a, 30b), and
- setting the calculated setting values on the metering apparatus (28);
**characterized in that** the detection of the seed grains (S, S1-S6) is carried out according to any of claims 7 to 17.

## Revendications

1. Système de détection (10) de graines (S, S1-S6), comportant
- une conduite de transport (30, 30a, 30b) de semences ;
- un terminal mobile (12), qui présente une caméra (14) destinée à générer des prises de vue (A, A1-A6) d'une zone de réception (38) de la conduite de transport (30, 30a, 30b) de semences se trouvant à l'intérieur de la conduite de transport (30, 30a, 30b) de semences ; et
- un dispositif support (60) destiné à fixer de manière amovible et non destructive le terminal mobile (12) à la conduite de transport (30, 30a, 30b) de semences et/ou à un soc semeur d'un semoir (200) ;
- un dispositif d'évaluation, qui est conçu pour évaluer une ou plusieurs prises de vue (A, A1-A6) de la zone de réception (38), générées par la caméra (14) du terminal mobile (12) afin de détecter les graines (S, S1-S6) passant par la zone de réception (38), **caractérisé par** un capteur de mesure de vitesse (22) par le biais duquel des vitesses de grain des graines (S, S1-S6) passant par la zone de réception (38) sont mesurables, le dispositif d'évaluation étant conçu pour évaluer les une ou plusieurs prises de vue (A, A1-A6) de la zone de réception (38), générées par la caméra (14) du terminal mobile (12), afin de détecter la quantité de graines (S, S1-S6) passant par la zone de réception (38) pendant une unité de temps, compte tenu des vitesses de grain mesurées par le biais du capteur de mesure de vitesse (22).

2. Système de détection (10) selon la revendication 1,
**caractérisé en ce qu'**une application de détection de grain (24) destinée à générer et/ou à gérer des prises de vue (A, A1-A6) de la zone de réception (38) est installée sur le terminal mobile (12).

3. Système de détection (10) selon la revendication 1,
**caractérisé en ce que** le dispositif d'évaluation est conçu pour prendre en compte un ou plusieurs paramètres de réglage actuels du semoir (200) lors de la détection des graines (S, S1-S6) passant par la zone de réception (38).

4. Système de détection (10) selon la revendication 1 ou 3,
**caractérisé en ce que** le dispositif d'évaluation est conçu pour détecter, dans les une ou plusieurs prises de vue (A, A1-A6), une trace de déplacement (BS) d'au moins une graine, créée par un flou de déplacement, et pour évaluer la trace de déplacement (BS) de la graine afin de détecter la vitesse de déplacement et/ou la direction de déplacement de la graine passant par la zone de réception (38).

5. Système de détection (10) selon la revendication 1,
**caractérisé en ce que** le dispositif d'évaluation est conçu pour combiner entre elles des données d'image du terminal mobile (12) concernant une ou plusieurs prises de vue individuelles du flux de semences dosé et des données de vitesse du capteur de mesure de vitesse (22) concernant la vitesse du flux de semences, en particulier afin de calculer le nombre de grains (S, S1-S6) par seconde.

6. Système de détection (10) selon l'une des revendications 1 ou 5,
**caractérisé en ce que** le capteur de mesure de vitesse (22) est un capteur radar qui fonctionne selon le principe Doppler.

7. Procédé de détection de graines (S, S1-S6) dans une conduite de transport (30, 30a, 30b) de semences d'un semoir (200) agricole par le biais d'un système de détection (10), en particulier par le biais d'un système de détection (10) selon l'une des revendications précédentes, comportant les étapes de :
- fixation amovible non destructive d'un terminal mobile (12) dans un logement d'appareil (62) d'un dispositif support (60) du système de détection (10) ;
- génération d'une ou de plusieurs prises de vue (A, A1-A6) d'une zone de réception (38) de la conduite de transport (30, 30a, 30b) de semences se trouvant à l'intérieur de la conduite de transport (30, 30a, 30b) de semences par le biais d'une caméra (14) du terminal mobile (12) du système de détection (10), pendant que le terminal mobile (12) est fixé dans le logement d'appareil (62) du dispositif support (60),
**caractérisé par** l'étape de :
- mesure des vitesses de grain des graines (S, S1-S6) passant par la zone de réception (38) par le biais d'un capteur de mesure de vitesse (22),
les une ou plusieurs prises de vue (A, A1-A6) de la zone de réception (38) générées par la caméra (14) du terminal mobile (12) étant évaluées afin de détecter la quantité de graines (S, S1-S6) passant par la zone de réception (38) pendant une unité de temps compte tenu des vitesses de grain mesurées par le biais du capteur de mesure de vitesse (22).

8. Procédé selon la revendication 7,
**caractérisé par** l'étape de
- évaluation des une ou plusieurs prises de vue (A, A1-A6), en particulier par le biais d'une application de détection de grains (24) installée sur le terminal mobile (12), afin de détecter des graines (S, S1-S6) passant par la zone de réception (38) de la conduite de transport (30, 30a, 30b) de semences.

9. Procédé selon la revendication 7 ou 8,
**caractérisé en ce que,** lors de l'évaluation des une ou plusieurs prises de vue (A, A1-A6), une trace de déplacement (BS) d'au moins une graine, créée par un flou de déplacement, est détectée et la trace de déplacement (BS) de la graine est évaluée afin de détecter la vitesse de déplacement et/ou la direction de déplacement de la graine passant par la zone de réception (38).

10. Procédé selon l'une des revendications 7 à 9,
**caractérisé en ce qu'**une application de détection de grains (24) installée sur le terminal mobile (12) permet à la caméra (14) du terminal mobile (12) de générer les une ou plusieurs prises de vue (A, A1-A6).

11. Procédé selon l'une des revendications 8 à 11,
**caractérisé en ce qu'**une application de détection de grains (24) installée sur le terminal mobile (12) permet à la caméra (14) du terminal mobile (12) de prendre une ou plusieurs prises de vue individuelles, une ou plusieurs prises de vue en série et/ou une ou plusieurs prises de vue vidéo de la zone de réception (38) lors de la génération des une ou plusieurs prises de vue (A, A1-A6).

12. Procédé selon l'une des revendications 8 à 11,
**caractérisé en ce que,** lors de l'évaluation des une ou plusieurs prises de vue (A, A1-A6), le flux de semences en grains (S, S1-S6) par seconde est calculé à partir de l'intervalle de temps d'une série de prises de vue et des grains comptés sur des images individuelles.

13. Procédé selon l'une des revendications 7 à 12,
**caractérisé en ce que,** lors de l'évaluation des une ou plusieurs prises de vue (A, A1-A6), une intelligence artificielle est utilisée pour la compensation des erreurs de mesure.

14. Procédé selon l'une des revendications 8 à 13,
**caractérisé en ce que** l'évaluation des une ou plusieurs prises de vue (A, A1-A6) est évaluée sur la base de propriétés enregistrées du type de semences, qui peuvent être attribuées aux semences transportées.

15. Procédé selon l'une des revendications 8 à 14,
**caractérisé en ce que,** lors de l'évaluation des une ou plusieurs prises de vue (A, A1-A6), des erreurs de mesure sont compensées par des lois établies.

16. Procédé selon l'une des revendications 8 à 10,
**caractérisé en ce qu'**une application de détection de grains (24) installée sur le terminal mobile (12) active un dispositif d'éclairage et/ou de flash du terminal mobile (12) lors de la génération des une ou plusieurs prises de vue (A, A1-A6) afin d'éclairer la zone de réception (38).

17. Procédé selon l'une des revendications 7 à 16,
**caractérisé en ce que** la génération des une ou plusieurs prises de vue (A, A1-A6) par le biais de la caméra (14) du terminal mobile (12) s'effectue à travers une fenêtre de prise de vue (36) d'une paroi (32) de conduite de la conduite de transport (30, 30a, 30b) de semences entourant un chemin de transport (34) pour les semences interne à la conduite, à travers laquelle la zone de réception (38) peut être vue depuis l'extérieur de la conduite de transport (30, 30a, 30b) de semences.

18. Procédé de réglage d'un dispositif de dosage (28) d'un semoir (200) agricole, comportant les étapes de :
- détection de graines (S, S1-S6) dans une conduite de transport (30, 30a, 30b) de semences d'un semoir (200) agricole ;
- calcul de valeurs de réglage pour le dispositif de dosage (28) compte tenu d'un flux de semences qui est déterminé sur la base des graines (S, S1-S6) détectées dans la conduite de transport (30, 30a, 30b) de semences et
- réglage des valeurs de réglage calculées sur le dispositif de dosage (28) ;
**caractérisé en ce que** la détection des semences (S, S1-S6) est effectuée selon l'une des revendications 7 à 17.
